# FASCICULE DE BREVET EUROPEEN

(11) **EP 3 167 009 B1**
(45) Date de publication et mention de la délivrance du brevet: **10.06.2020**
(21) Numéro de dépôt: 15738608.7
(22) Date de dépôt: 10.07.2015
(51) Int. Cl.: C08L 95/00, E01C 7/32, C04B 26/26, E01C 7/18, C08K 3/22, C04B 111/00

(54) **PROCEDE DE PREPARATION DE REVETEMENTS BITUMINEUX A FROID**
VERFAHREN ZUR HERSTELLUNG VON KALTVERFAHREN-BITUMENBESCHICHTUNGEN
METHOD FOR THE PRODUCTION OF COLD-PROCESS BITUMINOUS COATINGS

(30) Priorité: 10.07.2014 BE 201400528; 10.07.2014 FR 1456678
(43) Date de publication de la demande: 17.05.2017
(73) Titulaire: S.A. Lhoist Recherche et Développement, 1342 Ottignies-Louvain-la-Neuve (BE)
(72) Inventeur: LESUEUR, Didier, 38140 La Murette (FR)
(74) Mandataire: Gevers Patents
(86) Numéro de dépôt international: PCT/EP2015/065880
(87) Numéro de publication internationale: WO 2016/005583

(56) Documents cités:
- WO-A1-2012/009339
- GB-A- 581 187
- GB-A- 2 327 669
- US-A- 3 206 174
- US-A- 4 193 816
- BAYOMY FOUAD M: "Development and analysis of cement-coated aggregates for asphalt mixtures", ASTM SPECIAL TECHNICAL PUBLICATION, PHILADELPHIA, PA, US, no. 1147, 12 octobre 1992 (1992-10-12), pages 19-34, XP002108078, ISSN: 0066-0558
- "DIN EN 12597. Bitumen und bitumenhaltige Bindermittel - Terminologie = Bitumen and bituminous binders - Terminolgy", DEUTSCHE NORMEN. DIN NORM,, vol. EN-12597, 1 janvier 2001 (2001-01-01) , pages 102-112, XP009144597,

## Description

La présente invention se rapporte à un procédé permettant d'améliorer l'adhésivité (à l'interface) du liant au granulat, la cohésion (dans la masse) et la vitesse de prise (cohésion dans le temps) de revêtements bitumineux à froid, en particulier des Enduits Superficiels d'Usure (ESU). Plus particulièrement, la présente invention se rapporte à un procédé de préparation de revêtements bitumineux à froid, en particulier d'enduits superficiels d'usure (ESU), comprenant les étapes de
a) Préparation d'un liant bitumineux sous forme d'une émulsion cationique de bitume,
b) Préparation d'un granulat comprenant au moins une première fraction de granulat, et
c) Formation dudit revêtement bitumineux à froid formé d'au moins ledit granulat interpénétré dans ledit liant.

De tels procédés de préparation de revêtements bitumineux à froid sont bien connus.

De manière générale, les revêtements bitumineux sont obtenus à partir d'un mélange de granulats et d'un liant bitumineux. Plus précisément, on distingue les revêtements bitumineux à froid des revêtements bitumineux à chaud ou tièdes en fonction de la manière dont est apporté ce liant bitumineux.

Ainsi, dans le cas des revêtements bitumineux à chaud, le bitume étant trop visqueux à température ambiante, il doit être ramolli par chauffage à des températures de l'ordre de 160°C pour être manipulable. Egalement, les granulats doivent être séchés pour permettre un bon enrobage par le bitume chaud. Le revêtement est fabriqué en conséquence à une température de l'ordre de 160°C.

Pour éviter ou du moins réduire la consommation énergétique et les émissions associées (fumées, gaz à effet de serre,...), d'autres techniques ont été développées. A ce titre, les revêtements bitumineux tièdes (également appelés parfois semi-tièdes) permettent, par l'emploi d'additifs et/ou par une modification astucieuse du procédé industriel à chaud, de diminuer les températures de fabrication de 10 à 60°C. Cependant, l'étape de séchage des granulats est toujours nécessaire et le procédé industriel reste alors très proche de celui du revêtement bitumineux à chaud. Egalement, le bitume reste manipulé à des températures de l'ordre de 160°C. A ce titre, les enrobés tièdes sont présentés par l'industrie routière comme étant comparables en tout point aux enrobés à chaud, à l'exception de leur température de mise en œuvre.

Dans le cas des revêtements bitumineux à froid, le séchage systématique du granulat n'est plus nécessaire et ces techniques utilisent donc des procédés complètement différents de ceux utilisés pour le chaud ou le tiède. En effet, le bitume est alors rendu manipulable à température ambiante principalement via sa mise en émulsion, mais également via l'emploi de bitume fluxé ou de mousse de bitume. En conséquence de cette manière d'apporter le liant, les revêtements bitumineux à froid sont soumis à un phénomène de prise, qui se manifeste par le fait que leurs propriétés finales ne sont pas obtenues instantanément et que l'on passe d'un état initial suffisamment "fluide" permettant la mise en œuvre, à un état final cohésif qui résiste au trafic, selon une cinétique allant de quelques dizaines de minutes à plusieurs années. Le formulateur doit donc en contrôler la cohésion (aptitude globale à résister aux efforts liés au trafic), l'adhésion (aptitude à maintenir un lien pérenne entre liant et granulat) et la vitesse de prise (cinétique de passage de l'état initial à l'état final).

Les émulsions de bitume sont des émulsions comprenant du bitume émulsifié dans une phase aqueuse. Dans la pratique, les émulsions de bitume sont surtout des émulsions cationiques, c'est-à-dire obtenues à l'aide d'émulsifiants chargés positivement. Les émulsifiants cationiques les plus courants sont des composés organiques issus de la classe des amines, pâteux ou liquides à température ambiante. Ces émulsifiants étant généralement insolubles dans l'eau, on ajoute une quantité suffisante d'un acide minéral ou organique afin d'ioniser les fonctions amines des émulsifiants pour permettre leur dissolution dans l'eau. Dans certains cas, il peut également être avantageux d'utiliser conjointement un autre émulsifiant, par exemple un tensio-actif amphotérique.

On connaît également des émulsions de bitume anioniques. Cependant, les émulsifiants anioniques ne jouent le rôle additionnel de dope d'adhésivité décrit plus loin, que pour les granulats calcaires, qui sont généralement exclus des couches de surface routière du fait de leur faible résistance au polissage.

Le bitume fluxé est un mélange de bitume et d'un fluxant d'origine pétrolière, houillère ou végétal, permettant d'en diminuer la viscosité. Cependant, son emploi implique généralement des émissions de Composés Organiques Volatiles (COV) que l'on cherche à diminuer en privilégiant les techniques à l'émulsion.

La mousse de bitume est un moyen de rendre le bitume manipulable à température ambiante, par addition de faibles quantités d'eau (quelques %) au bitume chaud, provoquant ainsi son moussage. Cette technique a été utilisée avec succès pour réaliser des ESU mais souffre du besoin de machines dédiées et de formulations très spécifiques qui fait que son emploi en ESU a quasiment disparu. Elle reste cependant usitée pour le retraitement en place de chaussées, en particulier en présence de quantités significatives de matériaux granulaires non liés ou traités aux liants hydrauliques.

Toutes ces techniques routières combinant l'emploi de bitume manipulable à température ambiante et de granulat sont connues conjointement sous le nom de "techniques à froid". Les techniques à froid permettent avantageusement de s'affranchir de l'étape énergivore de séchage du granulat, nécessaire dans les techniques à chaud ou tièdes pour assurer un bon collage du liant au granulat en présence de liant anhydre. Par exemple, dans les revêtements bitumineux à froid à base d'émulsion de bitume, ce collage est assuré malgré la présence d'eau, car l'émulsifiant est choisi de manière à jouer également le rôle de dope d'adhésivité (voir plus loin).

Dans les revêtements bitumineux à froid, le liant bitumineux est donc typiquement préparé sous forme d'une émulsion bitumineuse ou d'un bitume fluxé et est appliqué sur la surface à recouvrir, par exemple la surface d'une chaussée. Le liant bitumineux peut être appliqué sur une couche de granulat déjà posée sur la surface ou avant la pose de la couche de granulat. Alternativement, le liant bitumineux et le granulat peuvent être d'abord mélangés ensemble, et répandus ensuite sur la surface à revêtir. Dans tous les cas, les deux matériaux (le granulat et le liant) s'interpénètrent et font prise ensemble.

Par revêtement bitumineux à froid, on entend, au sens de la présente invention, les enduits superficiels d'usure (ESU) et les enrobés à froid, où l'émulsion est malaxée au granulat pouvant être constitué exclusivement ou en partie d'agrégats d'enrobés (au sens de la norme EN 13108-8), qui incluent les enrobés denses à froid, les graves-émulsion ou encore le retraitement à l'émulsion (voir le document « Les Emulsion de Bitume » cité ci-dessous).

La technique des ESU consiste à apporter le liant par une ou plusieurs couches, suivie et/ou précédée de l'apport d'une ou plusieurs couches de granulats. Dans ce cas, le liant est généralement apporté sous forme d'émulsion de bitume.

Les enrobés denses à froid et les graves-émulsion sont des enrobés obtenus par le mélange en centrale d'enrobage, de granulats et d'émulsion de bitume. Les enrobés denses à froid se caractérisent par une plus forte teneur en liant que les graves-émulsion, ce qui permet une meilleure tenue à l'eau et une meilleure résistance à l'arrachement, permettant un emploi en couche de roulement sous fort trafic. Les graves-émulsions, du fait de leur plus faible teneur en liant, sont beaucoup plus maniables et permettent ainsi un emploi préférentiel en couche de reprofilage ou de rechargement, en particulier pour des contraintes d'épaisseurs variables liées à un support hétérogène, où elles peuvent être directement soumise à de faibles trafics, ou être recouvertes par exemple d'un ESU ou d'un enrobé dense à froid sous trafics plus forts. Elles peuvent également servir de couche de base en chaussée neuve.

Le retraitement à l'émulsion ou à la mousse de bitume correspond à la réalisation d'une grave-émulsion ou une grave-mousse en centrale ou in-situ à l'aide de machines dédiées. Le fraisat de chaussées anciennes est alors mélangé à un liant ajouté sous forme d'émulsion de bitume ou de mousse de bitume. Les propriétés sont proches de celles des graves-émulsions, avec l'avantage économique et environnemental d'utiliser comme matière première les fraisats qui seraient autrement un déchet de construction et de limiter ainsi l'emploi en granulats neufs.

Il existe également un autre type de revêtement bitumineux à froid, appelé enrobé coulé à froid (ECF). L'ECF est une forme de revêtement mince qui possède un domaine d'emploi proche des ESU. En revanche, il s'en différencie par la formulation, qui est systématiquement à base d'émulsion de bitume, et par les procédés de mise en œuvre, qui utilisent des machines dédiées qui emportent l'ensemble des ingrédients (granulat humide, eau, émulsion de bitume, lait de chaux et autres additifs) et les répand en une seule opération à grand rendement. La principale différence entre les ECF et les autres revêtements à froid, est qu'ils constituent une classe de matériaux pour lesquels la formulation a été optimisée ces dernières années de manière à en contrôler la rupture, par l'emploi de couples rupteurs/retardateurs qui permettent de contrôler finement la rupture de l'émulsion. En revanche, ces technologies n'ont pas diffusé dans le domaine des ESU ou des enrobés à froid (denses, graves-émulsion ou retraitement en place), où les technologies de mise en œuvre rendent difficiles la multiplication des additifs. Egalement, les ECF sont réalisés in-situ avec un temps très court (de l'ordre d'une à deux minutes) entre le mélange des ingrédients et leur pose, permettant ainsi une remise au trafic rapide sous réserve que l'émulsion rompe rapidement. En revanche, les graves-émulsions et les enrobés à froid sont transportées par camion de la centrale au chantier, nécessitant un délai de maniabilité de plusieurs heures.

La norme EN 12271 décrit les enduits superficiels d'usure (ESU), alors que la norme EN 12273 est consacrée aux enrobés coulés à froid (ECF).

Le document édité par la Section des Fabricants d'Emulsion Routière de Bitume (SFERB) de l'Union des Syndicats de l'Industrie Routière Française (USIRF), intitulé « Les Emulsions de Bitume » (Paris : Revue Générale des Routes et Aérodromes Ed., 2006) décrit particulièrement les techniques et procédés utilisant les émulsions de bitume comme liant telles que les ESU, les ECF et l'ensemble des techniques à froid.

Le problème des techniques routières à l'émulsion de bitume, est que l'eau sert uniquement de vecteur pour apporter le bitume et doit donc ensuite disparaître pour ne laisser que le liant. L'ensemble des processus physico-chimiques permettant le passage de l'émulsion au film de bitume final est généralement appelé dans la profession "rupture de l'émulsion". La rupture s'entend donc comme le passage pour le liant, d'un état initial où il est dispersé en phase aqueuse (émulsion) vers un état final où il constitue un film continu, plus ou moins rigide, souvent appelé « liant résiduel ». Ce phénomène se produit naturellement, par évaporation progressive de l'eau. Cependant, en fonction notamment des applications, des contraintes de chantier et du climat (température, humidité de l'air, vent,...), la rupture de l'émulsion peut être accélérée à l'aide d'un ou plusieurs additifs communément appelé(s) rupteur d'émulsion.

Dans ces conditions, l'emploi de chaux pour provoquer la rupture de l'émulsion est une solution connue mais peu utilisée du fait de la violence de la réaction. L'emploi de la chaux en tant que rupteur provient de ce qu'elle neutralise l'acide et emmène donc le tensioactif dans un domaine de pH où il perd sa charge et donc son caractère tensioactif. La chaux constituant une base forte, cette réaction est difficile à contrôler et génère une rupture souvent qualifiée de violente.

Du fait de la violence de la rupture, sa mise en œuvre au niveau industriel se limite à de rares cas de techniques routières à l'émulsion de bitume où le formulateur a su ajuster cette violence de rupture avec les spécificités opérationnelles propres à l'application visée, notamment (i) grâce à du lait de chaux apporté sous forme concentrée stabilisée ou fabriqué in-situ (apport de chaux hydratée à une formulation contenant par ailleurs déjà de l'eau) dans les ECF où tous les ingrédients sont mélangés ensemble lors d'une opération unique (granulat humide, eau, émulsion de bitume, lait de chaux et autres additifs éventuels tels que des retardateurs de prise) ou (ii) grâce à du lait de chaux fabriqué in-situ dans le retraitement en place à l'émulsion de bitume où les ingrédients sont également malaxés ensemble dans une étape unique (fraisat d'enrobé ancien, eau, émulsion de bitume, chaux hydratée). Ceci est uniquement possible car ces technologies sont réalisées in-situ avec des machines spéciales, permettant de limiter le temps entre la mise en contact des ingrédients et la pose, ce qui permet l'emploi de rupteurs violents.

La principale application des émulsions de bitume en termes de revêtement bitumineux, est la technique des ESU. Cette technique est économique et convient bien aux voies à trafic modéré qui constituent l'essentiel du réseau routier local (réseau départemental notamment en France).

Malheureusement, l'emploi de lait de chaux comme rupteur ajouté directement à l'émulsion ne fonctionne pas dans les ESU car la rupture y est trop violente et favorise la formation d'une peau rompue en surface, emprisonnant de l'eau en-dessous.

Les enduits superficiels d'usure (ESU) souffrent également d'un désavantage majeur : ils résistent mal aux efforts liés au trafic au jeune âge, c'est-à-dire peu de temps après leur mise en œuvre. Il en résulte un risque de projection de granulats pouvant entrainer des bris de parebrises. A cet effet, le formulateur cherche à en accélérer la vitesse de prise et/ou améliorer l'adhésion du liant au granulat et/ou la cohésion du liant. Ce désavantage a fait l'objet de recherches et de développement qui ont abouti à certaines solutions telles que décrites dans le document «Code de bonne pratique des enduits superficiels », CRR Ed.: Bruxelles, 2001 - Recommandations R 71/01, http://www.brrc.be/publications/r/r7101.pdf - « Centre de Recherche Routière (CRR) ».

Selon ce document, les solutions permettant d'améliorer l'adhésivité du liant au granulat dans les ESU sont résumées comme suit :
1°) le granulat doit être aussi propre que possible (dépourvu de fines notamment) et sec,
2°) si malgré l'emploi d'un granulat propre, l'adhésivité est insuffisante, l'emploi d'un dope est une solution usuelle. Le dope est typiquement un composé organique tensioactif, et souvent un tensioactif aminé, qui se rapproche ainsi des émulsifiants cationiques pour bitume. Le dope peut être mis dans le liant (dans le cas des émulsions de bitume, l'émulsifiant est choisi de manière à jouer le rôle de dope également), sur le granulat (pré-enrobage du granulat par le tensioactif) ou à l'interface entre le liant et le granulat.

Dans ce second cas, un des inconvénients, en particulier concernant le traitement du granulat, est le contrôle de faibles teneurs en additifs organiques (dosage usuels de 0,1 à 0,5 % en masse de solutions diluées de tensioactif par rapport au granulat). Egalement, ces tensioactifs sont généralement des dérivés aminés obtenus par des procédés de synthèse organique complexes et polluants, avec des profils éco-toxicologiques défavorables (en particulier, beaucoup sont classés dangereux pour l'environnement).

Il faut noter que la chaux hydratée est connue pour avoir un rôle similaire à celui des dopes d'adhésivité, lorsqu'elle est ajoutée aux enrobés à
chaud ou tièdes. Ainsi, le formulateur qui utilise un émulsifiant jouant aussi le rôle de dope n'est pas tenté d'ajouter également de la chaux, car cela ferait double emploi et constituerait donc un surcout inutile.

Pour les enduits (ESU) au bitume fluxé, le pré-enrobage au bitume des granulats est une solution usuelle pour améliorer l'adhésivité. En revanche, elle représente un surcoût économique et opérationnel conséquent, puisque les granulats doivent passer par une installation industrielle (centrale d'enrobage) où ils sont séchés puis enrobés avec typiquement 1% en masse de bitume. On perd alors le bénéfice environnemental des techniques à froid, puisque le séchage énergivore des granulats est alors réintroduit.

Dans le cas des enrobés à froid, il est connu d'utiliser des techniques d'enrobage séquentiel et/ou de double enrobage à l'émulsion et/ou d'emploi d'émulsions de grades de bitume différents afin d'obtenir une répartition aussi homogène que possible du liant sur l'ensemble des fractions. Ces procédés visent également à augmenter adhésivité, cohésion et vitesse de prise des enrobés à froid mais représentent une complexité industrielle accrue nécessitant des modifications majeures dans les installations et en conséquence, un surcoût économique notoire.

L'invention a pour but de pallier les inconvénients de l'état de la technique en procurant un procédé qui permet d'augmenter l'adhésivité du liant au granulat et la cohésion du revêtement bitumineux à froid au jeune âge, sans représenter un surcout économique et sans présenter de dangers toxicologiques importants.

A cette fin, il est prévu suivant l'invention, un procédé tel qu'indiqué au début caractérisé en ce que ladite étape de préparation dudit granulat comprend une étape d'enrobage de ladite au moins une première fraction de granulat à la chaux, qui comprend une application d'une composition de chaux sur ladite au moins une première fraction de granulat par immersion, trempage, vaporisation, pulvérisation ou mélange à raison d'une teneur en chaux de 0,05 à 2% en poids exprimée en équivalent hydroxyde (Ca(OH)₂ et/ou Mg(OH)₂) par rapport au poids total de granulat, par exemple à partir d'une composition de chaux.

Il a en effet été observé selon la présente invention que l'enrobage (traitement) préalable d'au moins une première fraction du granulat routier à la chaux pour former un revêtement bitumineux à froid, permettait d'augmenter l'adhésivité du liant au granulat et la cohésion et la vitesse de prise du revêtement bitumineux, en particulier au jeune âge (phénomène de prise), sans représenter un surcout économique et sans présenter de dangers toxicologiques importants.

Ceci permet en outre l'avantage collatéral d'ainsi étendre la période de mise en oeuvre de ces revêtements, qui sont autrement limités à des conditions météorologiques favorables, difficiles à obtenir en Europe hors de la période d'avril à septembre (température du support idéalement supérieure à 10°C et faible humidité). Ceci permet également de limiter les départs de granulat au jeune âge, qui limitent la traficabilité des revêtements juste après leur pose et peuvent générer des bris de pare-brise.

Par le terme « chaux », on entend au sens de la présente invention, les chaux hydratées calciques, les chaux hydratées dolomitiques, les magnésies hydratées, les chaux hydratées calco-magnésiennes, les chaux calciques vives, la magnésie, les chaux vives calco-magnésiennes ou dolomitiques, les chaux vives à réactivité retardée, comme par exemple les chaux partiellement pré-hydratées, les chaux vives sur-cuites, les chaux partiellement éteintes à additifs exogènes et leurs mélanges, les poussières de filtres, les cendres volantes, en particulier calciques, les ciments portland, les chaux hydrauliques, les chaux de construction telles que définies dans la norme EN 459-1, et leurs mélanges.

L'utilisation de chaux, en particulier de chaux hydratée est déjà connue dans les revêtements bitumineux à chaud, où la chaux améliore l'adhésivité du bitume au granulat, ralentit le vieillissement du bitume et améliore les propriétés mécaniques, tout ceci augmentant la durée de vie de l'enrobé. Dans ce cas, un lait de chaux est ajouté au granulat avant son séchage puis son enrobage par le bitume (voir par exemple D. Lesueur, "Increasing the durability of asphalt mixtures with hydrated lime: A critical review of the literature", Report to the European Lime Association, Version 2, April 2010 ; National Lime Association, "How to Add Hydrated Lime to Asphalt - An Overview of Current Methods", National Lime Association Report, 2003 - http://www.lime.org/documents/publications/free_downloads/how-to-add-lime.pdf). Cette application est cependant distincte de celles envisagées ici, puisque les enrobés à chaud sont des matériaux différents, fabriqués selon des procédés spécifiques et répondant à des normes différentes (série EN 13108-1 à 7 en Europe).

Les techniques utilisant des enrobés à chaud sont décrites dans GB2327669 et dans « Development and analysis of cernent coated aggregates for asphalt mixture » de Bayoni Fouad (XP002108078).

L'utilisation de chaux hydratée dans des enrobés tièdes est également déjà connue. Le document WO 12/009339 décrit l'emploi de lait de chaux pour faire un enrobé tiède. Les enrobés tièdes sont des procédés proches des enrobés à chaud, dont ils cherchent à obtenir les mêmes propriétés finales en abaissant la température de fabrication par différentes méthodes (additifs, procédés ou une combinaison des deux). Il n'y a pas de confusion possible entre les revêtements visés par la présente invention et l'emploi de lait de chaux en traitement de granulats pour enrobés tièdes ou à chaud, puisque les procédés industriels sont différents et les produits finaux relèvent de propriétés et de normes différentes. En effet, le principal problème à résoudre pour les revêtements à froid est le contrôle de la rupture de l'émulsion de manière à assurer une bonne cohésion initiale et un faible arrachement de granulats pour permettre une remise sous trafic rapide, et aucune solution venant des enrobés à chaud ou tiède n'est donc transposable puisque le bitume n'y est pas sous forme d'émulsion.

De plus, jusqu'à ce jour, l'utilisation de chaux n'avait jamais été généralisée dans les revêtements bitumineux à froid.

En effet, les revêtements bitumineux à froid sont principalement obtenus à base d'émulsion de bitume ou de bitume fluxé. La chaux hydratée est connue pour être un rupteur d'émulsion souvent trop violent, favorisant à ce titre une rupture en peau dans les ESU, et rendant ainsi son application très limitée. Le seul domaine où elle est utilisée à ce jour de manière notoire comprend les ECF et les retraitements en place, pour lesquels une formulation adaptée doit alors être obtenue mais grâce à un savoir-faire très spécifique maîtrisé par un nombre limité d'acteurs, et correspondant à un cahier des charges non transposable aux autres revêtements à froid obtenus par enrobage, suite à la courte durée entre le mélange des constituants et leur pose. Cette limitation constituait d'ailleurs jusqu'à ce jour un préjugé technique majeur qui écartait largement l'homme de métier de la solution apportée par la présente invention.

Par exemple, le document US3206174 porte sur la formation d'ECF et enseigne d'ajouter, dans le mélange contenant les agrégats et l'émulsion de bitume, une petite quantité de fines particules telles que du ciment ou de la chaux.

Le document US4193816 enseigne d'ajouter de la chaux éteinte aux granulats avant de les mélanger à une émulsion anionique de bitume pour former des ECF. En plus d'être limité aux ECF, ce document utilise des émulsions de bitume anioniques, faisant dès lors appel à un mécanisme de rupture complètement différent de celui rencontré avec les émulsions cationiques. En effet, comme mentionné précédemment, la chaux permet la rupture des émulsions cationiques par effet de pH. A contrario, dans ce document, la chaux est utilisée pour sa capacité à libérer des ions Ca²⁺ qui peuvent ensuite former des complexes insolubles avec les émulsifiants anioniques. Ce mécanisme est donc exclusif de ces émulsifiants, dont l'emploi en technique routière est devenu anecdotique du fait de leur faible adhésivité.

Le document GB581187 décrit quant à lui un pré-enrobage des granulats à la chaux pour la formation de revêtements bitumineux à froid à base de goudron ou de bitume fluxé, et explique que cette solution ne fonctionne pas avec les émulsions de bitume.

C'est donc de manière particulièrement surprenante que la présente invention permet d'obtenir une adhésivité du liant au granulat améliorée et d'augmenter la cohésion et la vitesse de prise de nombreux revêtements bitumineux à froid utilisant les techniques routières à l'émulsion de bitume, en particulier les ESU, par l'enrobage du granulat ou d'une fraction de celui-ci par de la chaux. En effet, les recommandations préconisent, particulièrement pour les ESU, de chercher d'abord à obtenir un granulat propre et exempt de fines pour améliorer l'adhésivité du liant. Un granulat enrobé au préalable à la chaux est donc une solution qui va à l'encontre des enseignements actuels existants. Ceci, combiné à l'autre préjugé technique résidant dans le fait que la chaux est un rupteur d'émulsion violent, fait apparaître la présente invention particulièrement surprenante et inventive.

De plus, la solution du pré-enrobage du granulat ou d'une fraction de celui-ci à la chaux a lieu, dans son application et dans son principe, comme un prétraitement à l'aide de tensioactif, ce qui permet l'utilisation sans modifications majeures des installations actuellement utilisées nécessaires pour les procédés existants, contrairement aux techniques de pré-enrobage au bitume. En outre, l'enrobage à la chaux est une solution minérale peu couteuse, sans dangers toxicologiques et environnementaux, facile à contrôler en termes de vérification des dosages par rapport aux additifs organiques.

Les mécanismes d'action probables sont doubles. Tout d'abord, la quantité de chaux apportée par cette voie consistant en un traitement de surface, permet d'être plus facilement contrôlée que par un mélange en masse de tous les constituants. De cette manière, l'effet de rupture violente est limité à une faible quantité d'émulsion. Ensuite, cette rupture se fait préférentiellement à la surface du granulat où se trouve la chaux, favorisant ainsi l'ancrage des gouttelettes de bitume constituant l'émulsion. Ce point contribue donc à améliorer l'adhésivité, ce qui en retour assure une répartition plus homogène du liant au sein du revêtement, ce qui contribue alors également à améliorer la cohésion.

Dans une forme avantageuse de la présente invention particulièrement ciblée sur les ESU, le procédé comprend
i) au moins une amenée dudit liant bitumineux sur une surface à revêtir, pour former au moins une couche de liant sur ladite surface à revêtir,
ii) au moins une amenée dudit granulat sur ladite surface à revêtir, avant ou après ledit liant bitumineux, et dans lequel ledit revêtement bitumineux est formé d'au moins une couche dudit granulat interpénétrée dans ledit liant bitumineux.

Dans un mode préféré du procédé selon la présente invention, ledit revêtement bitumineux formé d'au moins une couche dudit granulat interpénétré dans ledit liant bitumineux comprend un nombre asymétrique ou symétrique de couches de liant bitumineux et de granulats éventuellement en alternance.

Dans une variante selon la présente invention, particulièrement ciblée sur les enrobés à froid, qui incluent les grave-émulsions, les enrobés denses à froid et les retraitements à l'émulsion,
i) ledit liant bitumineux est amené dans un malaxeur,
ii) ledit granulat est amené dans ledit malaxeur, pendant, avant ou après ledit liant bitumineux, et
iii) ledit revêtement bitumineux est formé du mélange dudit granulat interpénétré dans ledit liant et est appliqué sur une surface à revêtir.

Le mélange du granulat enrobé et du liant peut donc, dans une variante à la préparation du revêtement bitumineux in situ, être préparé dans
une centrale d'enrobage, éventuellement mobile ou installée sur une plateforme automotrice, avant sa mise en œuvre sur la chaussée.

Il a en effet été observé selon la présente invention que la plage de teneur en chaux particulière, comprise entre 0,05 et 2% permettait d'améliorer la cohésion et la vitesse de prise, ainsi que l'adhésivité du liant au granulat. Comme on peut le voir, cette plage de valeur représente une consommation relativement faible de l'additif, mais suffisante pour en simplifier les dosages. Des valeurs trop restreintes étant souvent difficiles à doser et la répartition sur les granulats en devient dès lors douteuse. A contrario, des valeurs trop élevées conduiraient à une rupture trop rapide de l'émulsion.

Le traitement du granulat ou de la fraction de granulat peut être réalisé par tout moyen approprié permettant un bon contrôle de la teneur en chaux, et peut être adapté en fonction de la nature pulvérulente ou liquide de la chaux utilisée. De manière non restrictive, le granulat peut être mélangé avec la chaux dans un malaxeur, par exemple similaire à ceux trouvés dans les centrales à béton. La chaux peut aussi être pulvérisée directement à la surface du granulat par un système d'arrosage sur tapis convoyeur ou en sortie de camion gravillonneur utilisant alors des dispositifs similaires aux rampes à dope déjà commercialisées. Le traitement peut être effectué juste avant mise en contact du granulat avec l'émulsion ou plus en amont dans la carrière, avec un stockage pouvant aller jusqu'à quelques jours. Un stockage plus long n'est pas
recommandé car il induirait une carbonatation de la chaux qui se transformerait alors en carbonate de calcium et perdrait dès lors de son activité.

Dans une forme de réalisation particulière, ladite composition de chaux est choisie dans le groupe constitué des chaux hydratées calciques, des chaux hydratées dolomitiques, des magnésies hydratées, des chaux hydratées calco-magnésiennes, des chaux calciques vives, de la magnésie, des chaux vives calco-magnésiennes ou dolomitiques, des chaux vives à réactivité retardée, comme par exemple des chaux partiellement pré-hydratées, des chaux vives sur-cuites, des chaux partiellement éteintes à additifs exogènes et leurs mélanges, des poussières de filtres, des cendres volantes, en particulier calciques, des ciments portland, des chaux hydrauliques, des chaux de construction telles que définies dans la norme EN 459-1, et leurs mélanges.

Selon la présente invention, la chaux sera donc par exemple choisie en fonction du granulat et en particulier en fonction de sa teneur en eau.

En effet, il est prévu suivant l'invention de traiter un granulat trop humide à la chaux vive afin d'en réduire la teneur en eau et obtenir un lait de chaux in-situ, ou d'apporter la chaux sous forme de chaux hydratée sèche, sur un granulat légèrement humide dont on ne souhaite pas modifier la teneur en eau, ou encore d'apporter la chaux sous forme de lait de chaux. De cette manière, une solution sur mesure peut être envisagée en fonction de la teneur en eau initiale du granulat et de sa teneur en eau finale souhaitée.

Un excès de chaux vive peut également être utilisé de manière à disposer d'une réserve d'exothermicité au contact de l'eau apportée par l'émulsion et/ou le granulat et/ou le procédé à froid.

La chaux hydratée calcique est constituée d'un ensemble de particules solides, principalement de di-hydroxyde de calcium de formule Ca(OH)₂, et est le résultat industriel de l'extinction d'une chaux vive avec de l'eau, réaction également appelée hydratation. Ce produit est également connu sous le nom de chaux éteinte. Par la suite, le di-hydroxyde de calcium sera nommé simplement hydroxyde de calcium.

Cette chaux éteinte peut aussi contenir de l'oxyde de calcium qui n'aurait pas été hydraté au cours de l'extinction, tout comme elle peut contenir du carbonate de calcium CaCO₃. Ce carbonate de calcium peut provenir soit du calcaire initial dont est dérivée la chaux éteinte selon l'invention (incuits), soit d'une réaction de carbonatation partielle de la chaux éteinte au contact de l'air. La teneur en oxyde de calcium dans la chaux éteinte dans le cadre de la présente l'invention est généralement inférieure à 3 % en masse, de préférence inférieure à 2 % et de manière avantageuse inférieure à 1 %. Celle en carbonate de calcium est inférieure à 10 % en masse, de préférence inférieure à 6 % et de manière avantageuse inférieure à 4 %, de manière encore plus avantageuse inférieure à 3%.

Cette chaux éteinte peut aussi contenir de l'oxyde de magnésium MgO ou des phases dérivées du type Mg(OH)₂ ou MgCO₃, représentant globalement quelques dizaines de grammes par kilogramme. Néanmoins, la somme de ces impuretés, exprimées sous la forme de MgO, ne dépasse avantageusement pas 5 % en masse, de préférence 3 %, de préférence 2 % ou même 1 % du poids de la chaux hydratée calcique selon l'invention.

La chaux hydratée dolomitique est constituée d'un ensemble de particules solides, principalement de di-hydroxyde de calcium de formule Ca(OH)₂, de di-hydroxyde de magnésium Mg(OH)₂ et d'oxyde de magnésium, et répondant à la formule générale a Ca(OH)₂.b Mg(OH)₂.c MgO. a, b et c représentent des fractions massiques dont la somme vaut de 60 à 100 %. Les particules contiennent en outre de 0 à 40% en fraction massique de composés divers D, laquelle peut évidemment contenir des impuretés, à savoir des phases dérivées de SiO₂, Al₂O₃, Fe₂O₃, MnO, P₂O₅ et/ou SO₃, représentant globalement quelques dizaines de grammes par kilogramme de chaux. Ces particules solides peuvent aussi contenir en tant que composé D de l'oxyde de calcium qui n'aurait pas été hydraté au cours de l'extinction, tout comme elles peuvent contenir du carbonate de calcium CaCO₃ et/ou de magnésium MgCO₃, éventuellement combinés sous la forme de dolomie.

Cette chaux hydratée dolomitique est le résultat industriel de l'extinction d'une dolomie vive avec de l'eau, réaction également appelée hydratation. Ce produit est également connu sous le nom de chaux dolomitique éteinte. Par la suite, le di-hydroxyde de calcium et de magnésium sera nommé simplement hydroxyde de calcium ou de magnésium. La proportion de calcium et de magnésium est typiquement dictée par la proportion native existant dans les différents minerais et est typiquement comprise entre 0,8 et 1,2.

Les magnésies hydratées sont constituées d'un ensemble de particules solides, principalement de di-hydroxyde de magnésium de formule Mg(OH)₂, et sont le résultat industriel de l'extinction d'une magnésie vive avec de l'eau, réaction également appelée hydratation.

La chaux hydratée calco-magnésienne est constituée d'un ensemble de particules solides, principalement de di-hydroxyde de calcium de formule Ca(OH)₂,de di-hydroxyde de magnésium Mg(OH)₂ et d'oxyde de magnésium, et répondant à la formule générale a Ca(OH)₂.b Mg(OH)₂.c MgO. a, b et c représentent des fractions massiques dont la somme vaut de 60 à 100 %. Les particules peuvent contenir en outre de 0 à 40% en fraction massique de composés divers D, laquelle peut évidemment contenir des impuretés, à savoir des phases dérivées de SiO₂, Al₂O₃, Fe₂O₃, MnO, P₂O₅ et/ou SO₃, représentant globalement quelques dizaines de grammes par kilogramme de chaux. Ces particules solides peuvent aussi contenir en tant que matière D de l'oxyde de calcium qui n'aurait pas été hydraté au cours de l'extinction, tout comme elles peuvent contenir du carbonate de calcium CaCO₃ et/ou de magnésium MgCO₃, éventuellement combinés sous la forme de dolomie.

Cette chaux hydratée calco-magnésienne est le résultat industriel de l'extinction d'une dolomie vive avec de l'eau, réaction également appelée hydratation, ou le résultat de mélange de chaux calcique hydratée et/ou magnésie hydratée et/ou de chaux hydratée dolomitique. La proportion de calcium et de magnésium est typiquement dictée par la proportion des divers composants ajoutés et permet de sortir de la proportion native existant dans les différents minerais entre 0,8 et 1,2.

On entend par chaux calcique vive, une matière solide minérale, dont la composition chimique est principalement de l'oxyde de calcium, CaO. La chaux vive est communément obtenue par calcination de calcaire, principalement constitué de CaCO₃. La chaux vive contient des impuretés, à savoir, des composés tels de l'oxyde de magnésium, MgO, de la silice, SiO₂ ou encore de l'alumine, Al₂O₃, etc..., à hauteur de quelques pourcents. Il est entendu que ces impuretés sont exprimées sous les formes précitées mais peuvent en réalité apparaître sous des phases différentes. Elle contient également en général quelques pourcents de CaCO₃ résiduel, appelés incuits.

On entend par magnésie, au sens de la présente invention, une matière solide minérale, dont la composition chimique est principalement de l'oxyde de magnésium, MgO. La magnésie peut être obtenue par calcination de carbonate de magnésium, principalement constitué de MgCO₃ ou par oxydation de magnésium. La magnésie peut donc également contenir des impuretés, à savoir, des composés tels de l'oxyde de calcium, CaO, de la silice, SiO₂ ou encore de l'alumine, Al₂O₃, etc..., à hauteur de quelques pourcents. Il est entendu que ces impuretés sont exprimées sous les formes précitées mais peuvent en réalité apparaître sous des phases différentes.

La chaux vive calco-magnésienne ou dolomitique est une matière solide minérale, dont la composition chimique est principalement de l'oxyde de calcium, CaO et de l'oxyde de magnésium MgO. La chaux vive calco-magnésienne ou dolomitique est communément obtenue par calcination de dolomie, principalement constituée de CaCO₃ et de MgCO₃. La chaux vive contient des impuretés, à savoir, des composés tels que de la silice, SiO₂ ou encore de l'alumine, Al₂O₃, etc..., à hauteur de quelques pourcents. Il est entendu que ces impuretés sont exprimées sous les formes précitées mais peuvent en réalité apparaître sous des phases différentes. Elle contient également en général quelques pourcents de CaCO₃ et de MgCO₃ résiduels, appelés incuits. Selon que la chaux vive comprend en outre une addition exogène de MgO ou de CaO pour faire varier la proportion Ca/Mg, on l'appellera calco-magnésienne tandis que si elle est directement issue de la calcination de dolomie, on l'appellera chaux vive dolomitique.

Au sens de la présente invention, on appelle chaux vive à réactivité retardée, les chaux vives dont la réactivité à l'eau mesurée par le t₆₀ selon la norme EN 459-2 est allongée. Ces chaux comprennent typiquement les chaux vives à additifs exogènes, les chaux vives sur-cuites et les chaux partiellement préhydratées.

La chaux à additif exogène est une chaux dans laquelle les particules de chaux vive sont traitées en surface, plus particulièrement enrobées d'une couche d'un additif plus ou moins sensible à l'eau qui agit comme une couche protectrice pour retarder la mise en contact avec l'eau du cœur de chaux vive.

La chaux préhydratée est également une chaux traitée en surface et plus particulièrement une chaux à laquelle une petite quantité d'eau a été ajoutée, de manière insuffisante pour que l'intégralité des particules de chaux vive puisse s'éteindre. Dès lors, la partie la plus accessible à l'eau, c'est-à-dire la surface externe, réagira avec l'eau pour former de la chaux éteinte et l'on obtiendra des particules de chaux vive (en leur cœur) enrobées au moins partiellement d'une couche de chaux éteinte sur la surface extérieure.

La chaux sur-cuite est une chaux ayant subi un traitement de masse, c'est en fait une chaux densifiée, voire frittée obtenue par une cuisson prolongée et/ou à plus haute température de la chaux vive. La chaux sur-cuite ainsi obtenue est plus difficile d'accès pour l'eau car elle est en quelque sorte plus tassée ou plus serrée. Par conséquent, la réaction avec l'eau est retardée.

Dans le cas des poussières de filtres, des cendres volantes, en particulier calciques, des ciments portland, ce sont des composés apportant de la chaux de manière immédiate ou retardée, la chaux se forme en conséquence de l'hydratation du ciment.

De préférence, ladite composition de chaux est une composition solide ou une suspension comme par exemple un lait de chaux ou une pâte de chaux. Les suspensions de chaux peuvent être diluées ou concentrées, en fonction de la teneur en eau souhaitée et peuvent également être stabilisées à l'aide d'additifs permettant de stabiliser la viscosité dynamique du lait de chaux.

De telles suspensions de chaux éteinte ou laits/pâtes ou encore crème de chaux sont communément obtenus par extinction de chaux vive avec un excès d'eau (large ou non) ou par mise en suspension de chaux éteinte pulvérulente. Les particules obtenues sont composées de manière prédominante d'hydroxyde de calcium ou de magnésium, selon le type de chaux vive ou hydratée utilisé.

La viscosité d'un lait de chaux est une propriété déterminante quant à la mise en œuvre et la manipulation (pompage, transport en conduite,...) de la suspension. A cette fin, l'expérience a permis d'établir que la viscosité dynamique de la suspension doit être inférieure à 2000 mPa.s, de préférence inférieure à 1500 mPa.s.

En effet, comme mentionné ci-avant, la présente invention prévoit différents états physique ou de conditionnement de la chaux pour traiter le granulat. Il est donc prévu de traiter un granulat trop humide à la chaux vive pulvérulente afin d'en réduire la teneur en eau et obtenir un lait de chaux in-situ, ou d'apporter la chaux sous forme de chaux hydratée sèche, sur un granulat légèrement humide dont on ne souhaite pas modifier la teneur en eau, ou encore d'apporter la chaux sous forme de lait de chaux. De cette manière, une solution sur mesure peut être envisagée en fonction de la teneur en eau initiale du granulat et de sa teneur en eau finale souhaitée.

Dans une forme de réalisation particulière du procédé, ladite étape d'enrobage comprend en outre une étape d'amenée d'une phase aqueuse en particulier, lorsqu'un apport d'eau est judicieux ou si l'apport de chaux pour l'enrobage est réalisé par mélange de la chaux pulvérulente avec le granulat ou une première fraction du granulat dans un malaxeur.

Avantageusement, ledit granulat est choisi dans le groupe des graviers, des sables et des fillers, des granulats artificiels, comme par exemple des granulats issus de la déconstruction, des granulats spéciaux (granulats légers tels que les argiles, schistes ou laitiers expansées, granulats à haute caractéristique élaborés industriellement tels que les bauxites calcinées...), des granulats de sous-produits d'autres industries (laitiers,...) et leurs mélanges.

Plus particulièrement, ledit granulat appartient à une classe granulaire d/D exprimée selon la norme EN 13043, en termes de dimensions inférieures d et supérieures D de tamis de 0/4 à 0/30, en particulier une classe granulaire choisie dans le groupe constitué des classes granulaires de 0/4, 0/6, 0/8, 0/10, 0/14, 0/20, 0/30 et leurs mélanges.

Pour le cas plus spécifique des ESU, ledit granulat appartient à une classe granulaire d/D exprimée selon la norme EN 13043, en termes de dimensions inférieures d et supérieures D de tamis de 2/4 à 10/14, en particulier une classe granulaire choisie dans le groupe constitué des classes granulaires 2/4, 2/6, 4/6, 6/10, 10/14 et leurs mélanges.

Dans le cas d'une formule de revêtement à froid, différents types de granulats peuvent être utilisés. Ces granulats peuvent donc être des graviers de diverses tailles, du sable et des fillers ou encore un mélange de ces granulats, en utilisant plusieurs calibres de granulat. L'ensemble des calibres ou une fraction de granulat seulement peut être traitée à la chaux. En particulier, dans le cas d'enrobés à froid, on peut privilégier le traitement des plus gros granulats afin de favoriser l'ancrage de l'émulsion à leur surface, l'émulsion ayant sinon une préférence pour les granulats plus fins (sable et filler). On peut également favoriser le traitement des granulats les plus fins afin d'accentuer l'ancrage sur cette fraction ou encore traiter une classe intermédiaire. Bien entendu, le traitement préférentiel peut concerner une fraction granulaire en particulier ou une combinaison de plusieurs fractions. Egalement, une période de mûrissement de quelques secondes à quelques jours peut être envisagée, permettant par exemple d'assurer une hydratation complète d'une chaux vive faiblement réactive en présence de l'humidité naturelle du granulat.

On entend par "liant" tout liant hydrocarboné d'origine fossile ou de synthèse utilisable pour la réalisation de matériaux routiers. Le liant peut donc être un bitume issu du raffinage du pétrole ou un bitume de synthèse.

Selon un mode de réalisation particulier du procédé selon la présente invention, ledit liant peut comprendre un ou plusieurs polymères et/ou un ou plusieurs acides et/ou un ou plusieurs fluxants en tant qu'additif additionnel du bitume et/ou de l'émulsion de bitume.

En particulier, ledit liant peut comprendre un additif conventionnel d'émulsion de bitume, comme un tensioactif cationique contenant des groupes fonctionnels azote tels que des amines, des imidazolines, des amidoamines qui sont surtout les principaux émulsifiants utilisés pour les émulsions de bitume cationiques. Ces derniers sont rendus actifs en diminuant le pH via un acide, généralement chlorhydrique.

Ainsi, le liant peut comprendre des additifs couramment utilisés dans le domaine routier, tels que des polymères (EVA ou éthylène-acétate de vinyle, SBS ou styrène-butadiène-styrène, SB ou styrène-butadiène) réticulés ou non, des poudrettes de caoutchouc, des cires végétales ou d'origine pétrochimique, des dopes d'adhésivité, des acides en particulier des acides polyphosphoriques, des fluxants ou des agents régénérants d'origine pétrolière,
houillère, végétale ou encore animale, ainsi que d'éventuels agents réticulants pour ces fluxants.

D'autres formes de réalisation du procédé suivant l'invention sont indiquées dans les revendications annexées.

L'invention a aussi pour objet une composition de revêtement bitumineux à froid comprenant un liant bitumineux, initialement sous forme d'une émulsion cationique de bitume, et un granulat.

La composition selon la présente invention est caractérisée en ce que ledit granulat comprend au moins une première fraction de granulat enrobé d'une composition de chaux à raison d'une teneur en chaux de 0,05 à 2% en poids exprimée en équivalent hydroxyde (Ca(OH)₂ et/ou Mg(OH)₂ par rapport au poids total du granulat.

En particulier, ladite composition de chaux est choisie dans le groupe constitué des chaux hydratées calciques, des chaux hydratées dolomitiques, des magnésies hydratées, des chaux hydratées calco-magnésiennes, des chaux calciques vives, de la magnésie, des chaux vives calco-magnésiennes ou dolomitiques, des chaux vives à réactivité retardée, comme par exemple des chaux partiellement pré-hydratées, des chaux vives sur-cuites, des chaux partiellement éteintes à additifs exogènes et leurs mélanges, des poussières de filtres, des cendres volantes, en particulier calciques, des ciments portland, des chaux hydrauliques, des chaux de construction telles que définies dans la norme EN 459-1, et leurs mélanges.

Avantageusement, dans la composition selon la présente invention, ledit granulat est choisi dans le groupe des graviers, des sables et des fillers des granulats artificiels, comme par exemple des granulats issus de la déconstruction, des granulats spéciaux, des granulats de sous-produits d'autres industries et leurs mélanges.

De préférence, ledit granulat appartient à une classe granulaire d/D exprimée, selon la norme EN 13043, en termes de dimensions inférieures d et supérieures D de tamis de 0/4 à 0/30, en particulier une classe granulaire choisie dans le groupe constitué des classes granulaires de 0/4, 0/6, 0/8, 0/10, 0/14, 0/20, 0/30 et leurs mélanges.

Dans une variante de la composition selon la présente invention, particulièrement ciblée ESU, ledit granulat appartient à une classe granulaire d/D exprimée en termes de dimensions inférieures d et supérieures D de tamis de 2/4 à 10/14, en particulier une classe granulaire choisie dans le groupe constitué des classes granulaires 2/4, 2/6, 4/6, 6/10, 10/14 et leurs mélanges.

Dans une forme de réalisation préférentielle, ledit liant peut comprendre un ou plusieurs polymères et/ou un ou plusieurs acides et/ou un ou plusieurs fluxants en tant qu'additif additionnel du bitume ou de l'émulsion de bitume.

Plus particulièrement, dans une forme de réalisation, la composition selon l'invention comprend en outre un additif conventionnel d'émulsion de bitume, comme un tensioactif cationique contenant des groupes fonctionnels azote tels que des amines, des imidazolines, des amidoamines qui sont surtout les principaux émulsifiants utilisés pour les émulsions de bitume cationiques. Ces derniers sont rendus actifs en diminuant le pH via un acide, généralement chlorhydrique.

Ainsi, le liant peut comprendre des additifs couramment utilisés dans le domaine routier, tels que des polymères (EVA ou éthylène-acétate de vinyle, SBS ou styrène-butadiène-styrène, SB ou styrène-butadiène) réticulés ou non, des poudrettes de caoutchouc, des cires végétales ou d'origine pétrochimique, des dopes d'adhésivité, des acides en particulier des acides polyphosphoriques, des fluxants ou des agents régénérants d'origine pétrolière, houillère, végétale ou encore animale, ainsi que d'éventuels agents réticulants pour ces fluxants.

Dans une forme particulière de réalisation selon la présente invention, la composition de revêtement bitumineux à froid est un enrobé à froid sous forme d'une composition d'enrobés denses à froid, une composition de graves-émulsion ou une composition de retraitement d'émulsion.

Dans cette variante, la composition selon l'invention présente avantageusement une résistance conservée mesurée selon la norme NLT-162 supérieure ou égale à 50%, de préférence supérieure ou égale à 60%, en particulier supérieure ou égale à 75%.

Dans une autre variante selon la présente invention, la composition de revêtement bitumineux à froid est sous forme d'une composition d'enduit superficiel d'usure (ESU).

Dans cette autre variante, la composition selon l'invention présente avantageusement une cohésion mesurée après 30 min de mûrissement à température ambiante par un essai à la plaque Vialit selon la norme EN 12272-3 caractérisée par une teneur en granulats détachés inférieure à 85/100 granulats, de préférence inférieure à 75/100 granulats et de manière particulièrement avantageuse inférieure à 65/100 granulats.

D'autres formes de réalisation de la composition suivant l'invention sont indiquées dans les revendications annexées.

L'invention se rapporte également à une utilisation de chaux pour enrober des granulats de revêtement bitumineux à froid à base d'émulsion cationique de bitume.

Plus particulièrement, la présente invention se rapporte à une utilisation de chaux pour enrober des granulats de revêtement bitumineux à froid dans laquelle le revêtement bitumineux à froid est choisi parmi les enduits superficiels d'usure (ESU), les revêtement d'enrobés à froid, choisis dans le groupe constitué des revêtements d'enrobés denses à froid, des revêtements de graves-émulsion et des revêtements de retraitement d'émulsion.

D'autres formes d'utilisation de la composition suivant l'invention sont indiquées dans les revendications annexées.

D'autres caractéristiques, détails et avantages de l'invention ressortiront de la description donnée ci-après, à titre non limitatif et en faisant référence aux exemples.

Le but de l'invention est donc de fournir un procédé permettant d'améliorer l'adhésivité du liant bitumineux au granulat, la cohésion et la vitesse de prise, en particulier au jeune âge, d'un revêtement bitumineux à froid utilisant la technique à l'émulsion de bitume.

Le procédé de préparation de revêtements bitumineux à froid, en particulier d'enduits superficiels d'usure (ESU) selon l'invention comprend donc une étape de préparation d'un liant bitumineux sous la forme d'une émulsion cationique de bitume qui peut comprendre un ou plusieurs polymères et/ou un ou plusieurs acides et/ou un ou plusieurs fluxants en tant qu'additif additionnel du bitume et/ou de l'émulsion de bitume.

Un granulat est également préparé, typiquement à partir de graviers et/ou de sables et/ou de fillers et/ou des granulats artificiels, comme par exemple des granulats issus de la déconstruction, des granulats spéciaux, des granulats de sous-produits d'autres industries et leurs mélanges.

Ces différents types de granulats présentent différents calibres. Selon les applications, le granulat présentera une seule fraction d'un calibre ou un mélange de fractions de différents calibres ou d'un même calibre. Au moins une fraction de granulat est traitée à la chaux à raison d'une teneur en chaux de 0,05 à 2% exprimée en équivalent hydroxyde (Ca(OH)₂ et/ou Mg(OH)₂) par rapport au poids total de granulat pour former un granulat ou une fraction de granulat enrobé à la chaux. L'ensemble des calibres ou une fraction de granulat seulement peut être traitée. En particulier, dans le cas d'enrobés à froid, on peut privilégier le traitement des plus gros granulats afin de favoriser l'ancrage de l'émulsion à leur surface, l'émulsion ayant sinon une préférence pour les granulats plus fins (sable et filler). On peut également favoriser le traitement des granulats les plus fins afin d'accentuer l'ancrage sur cette fraction ou encore traiter une classe intermédiaire. Bien entendu, le traitement préférentiel peut concerner une fraction granulaire en particulier ou une combinaison de plusieurs fractions. Egalement, une période de mûrissement de quelques secondes à quelques jours peut être envisagée, permettant par exemple d'assurer une hydratation complète d'une chaux vive faiblement réactive en présence de l'humidité naturelle du granulat.

Le procédé selon l'invention consiste donc à traiter un granulat à la chaux avant de l'utiliser dans une formulation de revêtement à froid à base d'émulsion de bitume.

Il peut être réalisé par tout moyen approprié permettant un bon contrôle de la teneur en chaux, et peut être adapté en fonction de la nature pulvérulente ou liquide de la chaux utilisée. De manière non restrictive, le granulat peut être mélangé avec la chaux dans un malaxeur, par exemple similaire à ceux trouvés dans les centrales à béton. La chaux peut aussi être pulvérisée directement à la surface du granulat par un système d'arrosage sur tapis convoyeur ou en sortie de camion gravillonneur utilisant alors des dispositifs similaires aux rampes à dope déjà commercialisées. Le traitement peut être effectué juste avant mise en contact du granulat avec l'émulsion ou plus en amont dans la carrière, avec un stockage pouvant aller jusqu'à quelques jours. Un stockage plus long n'est pas recommandé car il induirait une carbonatation de la chaux qui se transformait alors en carbonate de calcium et perdrait alors de son activité.

Le granulat ainsi préparé et le liant bitumineux sont ainsi disposés sur une surface à revêtir. Le granulat peut être amené directement sur la surface à revêtir en une ou plusieurs couches, ou encore sur la couche de liant bitumineux préalablement disposée. Tout dépend de l'application souhaitée, de
l'épaisseur des couches, sachant qu'elles peuvent également être disposées alternativement les unes sur les autres.

Le revêtement bitumineux à froid est ainsi formé d'au moins une couche dudit granulat interpénétrée dans ladite couche de liant.

Le liant et le granulat peuvent également être préparés en mélange dans une centrale d'enrobage, comme par exemple une centrale mobile et être appliqués directement en mélange sur la chaussée.

La composition de chaux est choisie dans le groupe constitué des chaux hydratées calciques, des chaux hydratées dolomitiques, des magnésies hydratées, des chaux hydratées calco-magnésiennes, des chaux calciques vives, de la magnésie, des chaux vives calco-magnésiennes ou dolomitiques, des chaux vives à réactivité retardée, comme par exemple des chaux partiellement pré-hydratées, des chaux vives sur-cuites, des chaux partiellement éteintes à additifs exogènes et leurs mélanges, des poussières de filtres, des cendres volantes, en particulier calcique, des ciments portland, des chaux hydrauliques, des chaux de construction telles que définies dans la norme EN 459-1, et leurs mélanges et la composition peut être sous forme solide, pulvérulente ou sous forme d'une suspension.

Les suspensions de chaux peuvent être diluées ou concentrées, en fonction de la teneur en eau souhaitée et peuvent également être stabilisées à l'aide d'additifs permettant de stabiliser la viscosité dynamique du lait de chaux.

Si nécessaire, une phase aqueuse peut encore être ajoutée en fonction de l'humidité initiale contenue dans le granulat et de son humidité finale souhaitée.

### EXEMPLES.-

Pour les exemples ci-dessous, on utilise une émulsion bitumineuse appelée EMB1 à rupture rapide pour former un revêtement bitumineux à froid de la manière suivante :
Une émulsion de bitume EMB1 a été fabriquée en mélangeant les ingrédients suivants dans un pilote de laboratoire équipé d'un moulin colloïdal :
66 parties en masse de bitume 160/220 à une température de 140°C, en provenance de la raffinerie Repsol de Puertollano (Espagne)
34 parties d'une phase aqueuse à une température de 40°C, constituée d'eau, de 0,16 parties de suif diamine (Asfier 100 fourni par Kao) et d'un complément d'acide chlorhydrique permettant d'ajuster le pH à une valeur de 2,2.

On obtient ainsi une émulsion à 66% de liant EMB1 ayant un indice de rupture de 88 selon la norme EN 13075-1 ce qui correspond à une émulsion de type C65B4 selon la norme EN 13808. Ce type d'émulsion est couramment employé pour les ESU et est connu comme une "émulsion à rupture rapide" dans la profession.

### Exemple comparatif 1 : Fabrication d'un ESU (EC1)

Un ESU (EC1) a été réalisé au laboratoire dans le cadre d'un essai à la plaque Vialit selon la norme EN 12272-3. Cela se fait concrètement en appliquant l'émulsion EMB1 à hauteur d'1 kg/m² de liant résiduel sur une plaque métallique normalisée de 20 x 20 cm². 100 granulats silico-calcaires G1 de calibre 6/10 en provenance de la gravière de Jarama (Madrid, Espagne) sont disposés régulièrement à la surface de l'émulsion fraîchement répandue. Au bout d'un temps de mûrissement de 30 minutes à température ambiante, l'ESU est soumis à l'essai : La plaque est retournée (granulats orientés côté sol) et une bille d'acier normalisée de 510 g est lâchée sur la plaque 3 fois de suite d'une hauteur de 50 cm. A l'issue des chocs, les granulats qui se sont détachés de la plaque sont comptés en séparant granulats propres et granulats tâchés (c'est-à-dire les granulats sur lesquels du liant adhère). On évalue ainsi le nombre de granulats restés collés, ainsi que ceux tombés propres ou tâchés. Les granulats restés collés correspondent à la fois à une bonne adhésivité et une bonne cohésion. Les granulats tombés propres correspondent à une mauvaise adhésivité. Les granulats tombés tâchés correspondent à une mauvaise cohésion mais à une bonne adhésivité. Les résultats donnés sont obtenus comme la moyenne de 3 répétitions.

Les résultats sur l'ESU (EC1) de référence sont repris dans le Tableau 1. Ainsi, après 30 minutes, il apparaît que quasiment tous les granulats (96) se sont détachés de la plaque suite au choc et ils sont tous tâchés. Cela indique donc une cohésion insuffisante de l'ESU après 30 minutes.

### Exemple 1.- Fabrication d'enduits ESU (E1) selon l'invention

L'ESU (E1) selon l'invention a été réalisé au laboratoire. Pour se faire, le même essai (Vialit) que pour l'ESU (EC1) de référence a été employé. La même émulsion EMB1 a été appliquée à hauteur d'1 kg/m² de liant résiduel. Le même granulat G1 en provenance de la gravière de Jarama a été également utilisé, mais il a été auparavant traité cette fois avec 0,25 % en masse de lait de chaux concentré stabilisé à 45 % en masse de chaux hydratée (fourni par Lhoist). Cela représente un apport de 0,11 % de chaux hydratée par rapport au granulat. Les granulats ont ensuite été disposés régulièrement à la surface de l'émulsion fraîchement répandue comme pour l'ESU (EC1), formant ainsi l'ESU (E1). Au bout de 30 minutes de mûrissement, l'ESU est soumis à l'essai.

Les résultats sur l'ESU (E1) selon l'invention sont repris dans le Tableau 1. Il apparaît qu'une quantité plus importante de granulats (15) reste maintenant collée à la plaque malgré les chocs. Cela indique donc une cohésion nettement améliorée par rapport à l'ESU (EC1) après 30 minutes, grâce au traitement préalable du granulat à la chaux.

### Exemple 2.- Fabrication d'enduits ESU (E2) selon l'invention

L'ESU (E2) selon l'invention a été réalisé au laboratoire. Pour se faire, le même essai (Vialit) que pour l'ESU (EC1) de référence a été employé. La même émulsion EMB1 a été appliquée à hauteur d'1 kg/m² de liant résiduel. Le même granulat G1 en provenance de la gravière de Jarama a été également utilisé, mais il a été auparavant traité cette fois avec 0,5% en masse de lait de chaux concentré stabilisé à 45 % en masse de chaux hydratée (fourni par Lhoist). Cela représente un apport de 0,23 % de chaux hydratée par rapport au granulat. Les granulats ont ensuite été disposés régulièrement à la surface de l'émulsion fraîchement répandue comme pour l'ESU (EC1), formant ainsi l'ESU (E2). Au bout de 30 minutes de mûrissement, l'ESU est soumis à l'essai.

Les résultats sur l'ESU (E2) selon l'invention sont repris dans le Tableau 1. Il apparaît qu'une quantité plus importante de granulats (21) reste maintenant collée à la plaque malgré les chocs. Cela indique donc une cohésion nettement améliorée par rapport à l'ESU (EC1) après 30 minutes, grâce au traitement préalable du granulat à la chaux.

### Exemple 3.- Fabrication d'enduits ESU (E3) selon l'invention

L'ESU (E3) selon l'invention a été réalisé au laboratoire. Pour se faire, le même essai (Vialit) que pour l'ESU (EC1) de référence a été employé. La même émulsion EMB1 a été appliquée à hauteur d'1 kg/m² de liant résiduel. Le même granulat G1 en provenance de la gravière de Jarama a été également utilisé, mais il a été traité cette fois avec 1 % en masse de lait de chaux concentré stabilisé à 45 % en masse de chaux hydratée (fourni par Lhoist). Cela représente un apport de 0,45 % de chaux hydratée par rapport au granulat. Les granulats ont ensuite été disposés régulièrement à la surface de l'émulsion fraîchement répandue comme pour l'ESU (EC1), formant ainsi l'ESU (E3). Au bout de 30 minutes de mûrissement, l'ESU est soumis à l'essai.

Les résultats sur l'ESU (E3) selon l'invention sont repris dans le Tableau 1. Il apparaît qu'une quantité plus importante de granulats (14) reste maintenant collée à la plaque malgré les chocs. Cela indique donc une cohésion nettement améliorée par rapport à l'ESU (EC1) après 30 minutes, grâce au traitement préalable du granulat à la chaux.

### Exemple comparatif 2.- Fabrication d'enduit ESU (EC2)

Un ESU (EC2) a été réalisé au laboratoire selon l'art antérieur. Pour se faire, le même essai (Vialit) que pour l'ESU (EC1) de référence a été employé. Cela s'est fait en appliquant la même émulsion EMB1 à hauteur d'1 kg/m² de liant résiduel. Ensuite, l'émulsion répandue a été traitée avec 3 % d'un lait de chaux dilué, obtenu en mélangeant 1 vol. de lait de chaux stabilisé industriel à 10 vol. d'eau. A noter que la quantité de chaux hydratée totale représente environ le quart de celle utilisée pour l'ESU (E2). Une quantité supérieure provoque une rupture en surface de l'émulsion (peau), ne permettant pas d'enchâsser correctement les granulats. Les granulats G1 ont ensuite été disposés régulièrement à la surface de l'émulsion fraîchement répandue. Au bout de 30 minutes de mûrissement, l'ESU est soumis à l'essai.

Les résultats sur l'ESU (EC2) sont repris dans le Tableau 1. Il apparaît après 30 minutes que tous les granulats se décollent. 7 granulats détachés se trouvent être propres, montrant que le contact avec l'émulsion a été perturbé par l'apport direct de chaux et la formation d'une peau en surface de l'ESU, qui empêche le bon contact avec le granulat. Egalement, il apparaît que l'aspect de surface est très mauvais, avec certains granulats mélangés dans la peau de bitume et une partie d'émulsion résiduelle non rompue. Même s'ils avaient pu rester coller à la plaque dans les conditions de l'essai, il est clair que le passage du trafic auraient générer une ruine immédiate de l'ESU. Egalement, la présence de granulats détachés propres montre que le risque d'arrachement et donc de bris de parebrise, est très important avec cette formule. Aussi, les résultats sont clairement inférieurs à ceux obtenus pour l'ESU de référence (EC1.

**Tableau 1.-**

| ESU-exemples | ESU (EC1) | ESU (E1) | ESU (E2) | ESU (E3) | ESU (EC2) |
|---|---|---|---|---|---|
| Emulsion | EMB1 | EMB1 | EMB1 | EMB1 | EMB1 |
| Granulat | G1 | G1 | G1 | G1 | G1 |
| Traitement (en % chaux hydratée par rapport au granulat) | 0 | 0,11% | 0,23% | 0,45% | 0,12% |
| Granulats Adhérent (après 30 minutes) | 4 | 15 | 21 | 14 | 0 |
| Granulats Détachés Propres (Après 30 minutes) | 0 | 0 | 0 | 0 | 7 |
| Granulats Détachés Tâchés (Après 30 minutes) | 96 | 85 | 79 | 86 | 93 |

### Exemple comparatif 3.- Fabrication d'un ESU (EC3) de référence

Un ESU (EC3) a été réalisé au laboratoire dans le cadre d'un essai à la plaque Vialit en appliquant l'émulsion EMB1 à hauteur d'1 kg/m² de liant résiduel sur une plaque métallique normalisée de 20 x 20 cm². 100 granulats mylonitiques G2 de calibre 6/10 en provenance de la gravière Almonacid à Toledo (Castilla La Mancha, Espagne) sont disposés régulièrement à la surface de l'émulsion fraîchement répandue. Au bout d'un temps de mûrissement de 30 min à température ambiante, l'ESU est soumis à l'essai de la même manière que décrit précédemment.

Les résultats sur l'ESU (EC3) de référence sont repris dans le Tableau 2. Ainsi, après 30 min, il apparaît que tous les granulats (100) se détachent de la plaque suite au choc et ils sont tous tâchés. Cela indique donc une cohésion insuffisante de l'ESU après 30 min.

### Exemples 4 à 6.- Fabrication d'enduits ESU (E4, E5, E6)

Des enduits ESU (E4, E5, E6) ont été réalisés au laboratoire selon l'invention. Pour se faire, le même essai (Vialit) que pour l'ESU (EC3) de référence a été employé. Cela s'est fait en appliquant la même émulsion EMB1 à hauteur d'1 kg/m² de liant résiduel. Le même granulat G2 a été également utilisé, mais il a été auparavant traité avec 0,25, 0,5 ou 1 % en masse de lait de chaux concentré stabilisé industriel à 45 % en masse de chaux hydratée, fourni par Lhoist. Cela représente respectivement un apport de 0,11 %, 0,23% et 0,45 % de chaux hydratée par rapport au granulat. Les granulats ont ensuite été disposés régulièrement à la surface de l'émulsion fraîchement répandue comme pour l'ESU (EC3), constituant ainsi les ESU (E4, E5, E6) respectivement. Au bout de 30 min de mûrissement, l'ESU est soumis à l'essai.

Les résultats sur les ESU (E4, E5, E6) selon l'invention sont repris dans le Tableau 2. Il apparaît qu'une quantité plus importante de granulats (2, 11 et 7 respectivement) reste maintenant collée à la plaque malgré les chocs. Cela indique donc une cohésion nettement améliorée par rapport à l'ESU (EC3) après 30 min, grâce au traitement préalable du granulat à la chaux.

**Tableau 2.-**

| ESU - exemples | ESU (EC3) | ESU (E4) | ESU (E5) | ESU (E6) |
|---|---|---|---|---|
| Emulsion | EMB1 | EMB1 | EMB1 | EMB1 |
| Granulat | G2 | G2 | G2 | G2 |
| Traitement (en % chaux hydratée par rapport au granulat) | 0 | 0,11% | 0,23% | 0,45% |
| Granulats Adhérent (après 30 minutes) | 0 | 2 | 11 | 7 |
| Granulats Détachés Propres (Après 30 minutes) | 0 | 0 | 0 | 0 |
| Granulats Détachés Tâchés (Après 30 minutes) | 100 | 98 | 89 | 93 |

### Exemple 7.- Fabrication d'une émulsion bitumineuse EMB2 à rupture rapide

Une émulsion de bitume EMB2 a été fabriquée en mélangeant les ingrédients suivants dans un pilote de laboratoire équipé d'un moulin colloïdal :
66 parties en masse de bitume 160/220 à une température de 140°C, en provenance de la raffinerie Repsol de Puertollano (Espagne)
34 parties d'une phase aqueuse à une température de 40°C, constituée d'eau, de 0,2 parties d'amides gras de tallol (Indulin R66 fourni par MeadWestVaco) et d'un complément d'acide chlorhydrique permettant d'ajuster le pH à une valeur de 2,5.

On obtient ainsi une émulsion à 66% de liant EMB2 ayant un indice de rupture de 90 selon la norme EN 13075-1 ce qui correspond à une émulsion de type C65B4 selon la norme EN 13808. Ce type d'émulsion est couramment employé pour les ESU et est connu comme une "émulsion à rupture rapide" dans la profession.

### Exemple comparatif 4.- Fabrication d'un ESU (EC4) de référence

Un ESU (EC4) a été réalisé au laboratoire dans le cadre d'un essai à la plaque Vialit en appliquant l'émulsion EMB2 de l'exemple 7 à hauteur d'1 kg/m² de liant résiduel sur une plaque métallique normalisée de 20 x 20 cm². 100 granulats G1 en provenance de la gravière de Jarama sont disposés régulièrement à la surface de l'émulsion fraîchement répandue. Au bout d'un temps de mûrissement de 30 min à température ambiante, l'ESU est soumis à l'essai de la même manière que décrit précédemment.

Les résultats sur l'ESU (EC4) de référence sont repris dans le Tableau 3. Ainsi, après 30 min, il apparaît que de nombreux granulats (85) se détachent de la plaque suite au choc et ils sont tous tâchés. Cela indique donc une faible cohésion de l'ESU après 30 min.

### Exemples 8 à 10.- Fabrication d'enduits ESU (E8, E9, E10)

Des enduits ESU (E8, E9, E10) ont été réalisés au laboratoire selon l'invention. Pour se faire, le même essai (Vialit) que pour l'ESU (EC4) de référence a été employé. Cela s'est fait en appliquant la même émulsion EMB2 selon l'exemple 7 à hauteur d'1 kg/m² de liant résiduel. Le même granulat G1 a été également utilisé, mais il a été auparavant traité avec 0,25, 0,5 ou 1 % en masse de lait de chaux concentré stabilisé industriel à 45 % en masse de chaux hydratée, fourni par Lhoist. Cela représente respectivement un apport de 0,11 %, 0,23% et 0,45 % de chaux hydratée par rapport au granulat. Les granulats ont ensuite été disposés régulièrement à la surface de l'émulsion fraîchement répandue comme pour l'ESU (EC4) constituant ainsi les ESU (E8, E9, E10) respectivement. Au bout de 30 min de mûrissement, l'ESU est soumis à l'essai.

Les résultats sur les ESU (E8, E9, E10) selon l'invention sont repris dans le Tableau 3. Il apparaît qu'une quantité plus importante de granulats (32, 46 et 43 respectivement) reste maintenant collée à la plaque malgré les chocs. Cela indique donc une cohésion nettement améliorée par rapport à l'ESU (EC4) après 30 min, grâce au traitement préalable du granulat à la chaux.

**Tableau 3**

| ESU - exemples | ESU (EC4) | ESU (E8) | ESU (E9) | ESU (E10) |
|---|---|---|---|---|
| Emulsion | EMB2 | EMB2 | EMB2 | EMB2 |
| Granulat | G1 | G1 | G1 | G1 |
| Traitement (en % chaux hydratée par rapport au granulat) | 0 | 0,11% | 0,23% | 0,45% |
| Granulats Adhérent (après 30 minutes) | 15 | 32 | 46 | 43 |
| Granulats Détachés Propres (Après 30 minutes) | 0 | 0 | 0 | 0 |
| Granulats Détachés Tâchés (Après 30 minutes) | 85 | 68 | 54 | 57 |

### Exemple comparatif 5.- Fabrication d'un ESU (EC5) de référence

Un ESU (EC5) a été réalisé au laboratoire dans le cadre d'un essai à la plaque Vialit en appliquant l'émulsion EMB2 selon l'exemple 7 à hauteur d'1 kg/m² de liant résiduel sur une plaque métallique normalisée de 20 x 20 cm². 100 granulats mylonitiques G2 de calibre 6/10 en provenance de la gravière Almonacid à Toledo (Castilla La Mancha, Espagne) sont disposés régulièrement à la surface de l'émulsion fraîchement répandue. Au bout d'un temps de mûrissement de 30 min à température ambiante, l'ESU est soumis à l'essai de la même manière que décrit précédemment.

Les résultats sur l'ESU (EC5) sont repris dans le Tableau 4. Ainsi, après 30 min, il apparaît que presque tous les granulats (99) se détachent de la plaque suite au choc et ils sont tous tâchés. Cela indique donc une cohésion insuffisante de l'ESU après 30 min.

### Exemple 11 à 13.- Fabrication d'enduits ESU (E11, E12, E13)

Des enduits ESU (E11, E12, E13) ont été réalisés au laboratoire selon l'invention. Pour se faire, le même essai (Vialit) que pour l'ESU (EC5) de référence a été employé. Cela s'est fait en appliquant la même émulsion EMB2 selon l'exemple 7 à hauteur d'1 kg/m² de liant résiduel. Le même granulat G2 a été également utilisé, mais il a été auparavant traité avec 0,25, 0,5 ou 1 % en masse de lait de chaux concentré stabilisé industriel à 45 % en masse de chaux hydratée, fourni par Lhoist. Cela représente respectivement un apport de 0,11 %, 0,23% et 0,45 % de chaux hydratée par rapport au granulat. Les granulats ont ensuite été disposés régulièrement à la surface de l'émulsion fraîchement répandue comme pour l'ESU (EC5), constituant ainsi les ESU (E11, E12, E13) respectivement. Au bout de 30 min de mûrissement, l'ESU est soumis à l'essai.

Les résultats sur les ESU (E11, E12, E13) selon l'invention sont repris dans le Tableau 4. Il apparaît qu'une quantité plus importante de granulats (23, 36 et 26 respectivement) reste maintenant collée à la plaque malgré les chocs. Cela indique donc une cohésion nettement améliorée par rapport à l'ESU (EC5) après 30 min, grâce au traitement préalable du granulat à la chaux.

**Tableau 4.-**

| ESU - exemples | ESU (EC5) | ESU (E11) | ESU (E12) | ESU (E13) |
|---|---|---|---|---|
| Emulsion | EMB2 | EMB2 | EMB2 | EMB2 |
| Granulat | G2 | G2 | G2 | G2 |
| Traitement (en % chaux hydratée par rapport au granulat) | 0 | 0,11% | 0,23% | 0,45% |
| Granulats Adhérent (après 30 minutes) | 1 | 23 | 36 | 26 |
| Granulats Détachés Propres (Après 30 minutes) | 0 | 0 | 0 | 0 |
| . Granulats Détachés Tâchés (Après 30 minutes) | 99 | 77 | 64 | 74 |

### Exemples 14 et 15.- Fabrication d'enduits ESU (E14, E15)

Des ESU (E14, E15) ont été fabriqués comme précédemment, en utilisant les formules d'ESU (E5 et E12) respectivement, mais en laissant cette fois réagir le granulat traité au lait de chaux pendant 24 heures avant son utilisation dans l'ESU. Les résultats sont donnés dans le Tableau 5 suivant, où il apparaît que l'effet bénéfique du traitement est manifeste par rapport aux références ESU (EC3) et ESU (EC5) respectivement (Tableaux 2 et 4).

**Tableau 5.-**

| ESU - exemples | ESU (E14) | ESU (E15) |
|---|---|---|
| Emulsion | EMB1 | EMB2 |
| Granulat | G2 | G2 |
| Traitement (en % chaux hydratée par rapport au granulat) | 0,23% | 0,23% |
| Granulats Adhérent (après 30 minutes) | 12 | 29 |
| Granulats Détachés Propres (Après 30 minutes) | 0 | 0 |
| Granulats Détachés Tâchés (Après 30 minutes) | 88 | 71 |

### Exemple 16.- Fabrication d'une émulsion bitumineuse EMB3 à rupture lente

Une émulsion de bitume EMB3 a été fabriquée en mélangeant les ingrédients suivants dans un pilote de laboratoire équipé d'un moulin colloïdal :
60 parties en masse de bitume 70/100 à une température de 140°C, en provenance de la raffinerie Repsol de Puertollano (Espagne)
40 parties d'une phase aqueuse à une température de 40°C, constituée de 0,6 parties (par rapport à l'émulsion) de suif diamine éthoxylé (Asfier 218 fourni par Kao) et d'un complément d'acide chlorhydrique permettant d'ajuster le pH à une valeur de 2,5.

On obtient ainsi une émulsion à 60% de liant EMB3 ayant un indice de rupture de 260 selon la norme EN 13075-1 ce qui correspond à une émulsion de type C60B6 selon la norme EN 13808. Ce type d'émulsion est couramment employé pour les enrobés à froid et est connu comme une "émulsion à rupture lente" dans la profession.

### Exemple comparatif 6.- Fabrication d'une Grave-Emulsion GE 1 (EC6) de référence

Une GE 1 (EC6) a été réalisée au laboratoire. Pour ce faire, un granulat G3 de granulométrie 0/25 en provenance de la gravière de Jarama a été utilisé. Ce granulat, avec son humidité naturelle de 2 %, a été enrobé avec 6 % de l'émulsion EMB3 selon l'exemple 16 afin d'obtenir au final une teneur en bitume de 3,6 %, et un complément de 3,5 % d'eau. Le matériau ainsi obtenu a ensuite été compacté dans des moules cylindriques selon la norme espagnole NLT-161. Les éprouvettes de GE 1 (EC6) ainsi obtenue ont été pesées pour en déterminer la densité et ensuite conditionnées selon la norme espagnole NLT-162 afin d'en mesurer la résistance à sec et la résistance après une immersion de 24 heures dans un bain à 60°C. Le rapport des résistances après immersion et à sec, appelé résistance conservée, est alors calculé. En fonction du trafic visé, une valeur supérieure à 50, 60 ou 75 % est requise en Espagne pour les GE. La GE 1 (EC6) obtient une valeur de 63 %, la rendant acceptable pour un trafic maximum de 200 poids lourds/jour (PL/j).

### Exemple 17 et 18.- Fabrication de Graves-Emulsion GE 2 (E17) et GE 3 (E18)

Des GE 2 (E17) et GE 3 (E18) ont été fabriquées selon l'invention en utilisant une recette similaire à celle de la GE 1 (EC6), avec toutefois un traitement préalable du granulat G3 avec 0,5 ou 1 % en masse de lait de chaux concentré stabilisé industriel à 45 % en masse de chaux hydratée, fourni par Lhoist. Cela représente respectivement un apport de 0,23% et 0,45 % de chaux hydratée par rapport au granulat. Les GE 2 et 3 ont été préparées selon les mêmes étapes de malaxage puis compactage, et soumises à l'essai de tenue à l'eau (NLT-162). Les résultats sur les GE 2 et 3 selon l'invention sont repris dans le Tableau 6. Il apparaît que la résistance à sec et la résistance conservée augmentent de manière très significative grâce au traitement suivant l'invention, au point que les éprouvettes de GE 3 (E18) après immersion, générant pourtant un endommagement, ont une résistance supérieure à celle à sec de la GE 1 (EC6) de référence ! Egalement, GE 2 (E17) et GE 3 (E18) passent la spécification de résistance conservée la plus sévère (75 %). Contrairement à la référence GE1 (EC6), elles seraient ainsi acceptables pour un trafic de 800 PL/j.

**Tableau 6.-**

| GE - exemples | GE (EC6) | GE (E17) | GE (E18) |
|---|---|---|---|
| Emulsion | EMB3 | EMB3 | EMB3 |
| Granulat | G3 | G3 | G3 |
| Traitement (en % chaux hydratée par rapport au granulat) | 0 | 0,23% | 0,45% |
| Densité (g/cm3) Essai de tenue à l'eau (NLT-162) | 2,393 | 2,386 | 2,388 |
| Résistance à sec (MPa) | 1,77 | 2,11 | 2,23 |
| Résistance après immersion (MPa) | 1,11 | 1,62 | 1,91 |
| Résistance conservée (%) | 63 | 77 | 86 |

### Exemple 19.- Fabrication d'enduits ESU (E19) selon l'invention

L'ESU (E19) selon l'invention a été réalisé au laboratoire. Pour se faire, le même essai (Vialit) que pour l'ESU (EC1) de référence a été employé. La même émulsion EMB1 a été appliquée à hauteur d'1 kg/m² de liant résiduel. Le même granulat G1 en provenance de la gravière de Jarama a été également utilisé, mais il a été auparavant traité cette fois avec 0,2 % en masse de chaux vive (fournie par Lhoist), autrement dit avec 0,26 % de chaux exprimée en équivalent hydroxyde. A noter que le granulat possédait une teneur en eau de l'ordre de 0,1% avant traitement, et que la réaction d'hydratation n'est donc que partielle avant mise en contact avec l'émulsion, qui apportera le complément d'eau pour compléter l'hydratation. Les granulats ont ensuite été disposés régulièrement à la surface de l'émulsion fraîchement répandue comme pour l'ESU (EC1), formant ainsi l'ESU (E19). Au bout de 30 minutes de mûrissement, l'ESU est soumis à l'essai.

Les résultats sur l'ESU (E19) selon l'invention sont repris dans le Tableau 7. Il apparaît qu'une quantité plus importante de granulats (20) reste maintenant collée à la plaque malgré les chocs. Cela indique donc une cohésion nettement améliorée par rapport à l'ESU (EC1) après 30 minutes, grâce au traitement préalable du granulat à la chaux.

**Tableau 7.-**

| ESU - exemples | ESU (E19) |
|---|---|
| Emulsion | EMB1 |
| Granulat | G1 |
| Traitement (en % chaux hydratée par rapport au granulat) | 0,26% |
| Granulats Adhérent (après 30 minutes) | 20 |
| Granulats Détachés Propres (Après 30 minutes) | 0 |
| Granulats Détachés Tâchés (Après 30 minutes) | 80 |

### Exemple comparatif 7.- Fabrication d'enduits ESU (EC7)

Un ESU (EC7) a été réalisé au laboratoire. Pour se faire, le même essai (Vialit) que pour l'ESU (EC1) de référence a été employé. La même émulsion EMB1 a été appliquée à hauteur d'1 kg/m² de liant résiduel. Le même granulat G1 en provenance de la gravière de Jarama a été également utilisé, mais il a été auparavant traité cette fois avec 6 % en masse de lait de chaux (fourni par Lhoist) autrement dit avec 2,7 % de chaux exprimée en équivalent hydroxyde. Les granulats ont ensuite été disposés régulièrement à la surface de l'émulsion fraîchement répandue comme pour l'ESU (EC1), formant ainsi l'ESU (EC7). L'ESU fabriqué de cette manière génère une rupture hétérogène de l'émulsion avec formation de peau sous les granulats et emprisonnement d'eau, ne permettant pas d'en mesurer la cohésion après 30 min. Cette formule n'est donc pas applicable sur chaussée.

Il est bien entendu que la présente invention n'est en aucune façon limitée aux formes de réalisations décrites ci-dessus et que bien des modifications peuvent y être apportées sans sortir du cadre des revendications annexées.

## Revendications

1. Procédé de préparation de revêtements bitumineux à froid, en particulier d'enduits superficiels d'usure (ESU), comprenant les étapes de
a) Préparation d'un liant bitumineux sous forme d'une émulsion de bitume cationique,
b) Préparation d'un granulat comprenant au moins une première fraction de granulat, et
c) Formation dudit revêtement bitumineux à froid formé d'au moins ledit granulat interpénétré dans ledit liant,
**caractérisé en ce que** ladite étape de préparation dudit granulat comprend une étape d'enrobage de ladite au moins une première fraction de granulat à la chaux, qui comprend une application d'une composition de chaux sur ladite au moins une première fraction de granulat par immersion, trempage, vaporisation, pulvérisation ou mélange à raison d'une teneur en chaux de 0,05 à 2% en poids exprimée en équivalent hydroxyde (Ca(OH)₂ et/ou Mg(OH)₂) par rapport au poids total de granulat..

2. Procédé de préparation selon la revendication 1, comprenant
i) au moins une amenée dudit liant bitumineux sur une surface à revêtir, pour former une couche de liant sur ladite surface à revêtir,
ii) au moins une amenée dudit granulat sur ladite surface à revêtir, avant ou après ledit liant bitumineux, ledit revêtement bitumineux étant formé d'au moins une couche dudit granulat interpénétrée dans ledit liant bitumineux.

3. Procédé de préparation selon la revendication 2, dans lequel ledit revêtement bitumineux formé d'au moins une couche dudit granulat interpénétré dans ledit liant bitumineux comprend un nombre asymétrique ou symétrique de couches de liant bitumineux et de granulats éventuellement en alternance.

4. Procédé de préparation selon la revendication 1, dans lequel
i) ledit liant bitumineux est amené dans un malaxeur,
ii) ledit granulat est amené dans ledit malaxeur, pendant, avant ou après ledit liant bitumineux, et
iii) ledit revêtement bitumineux est formé du mélange dudit granulat interpénétré dans ledit liant et est appliqué sur une surface à revêtir.

5. Procédé de préparation selon l'une quelconque des revendications 1 à 4, dans lequel ladite composition de chaux est choisie dans le groupe constitué des chaux hydratées calciques, des chaux hydratées dolomitiques, des magnésies hydratées, des chaux hydratées calco-magnésiennes, des chaux calciques vives, de la magnésie, des chaux vives calco-magnésiennes ou dolomitiques, des chaux vives à réactivité retardée, des chaux partiellement pré-hydratées, des chaux vives surcuites, des chaux partiellement éteintes à additifs exogènes et leurs mélanges, des poussières de filtres, des cendres volantes, des ciments portland, des chaux hydrauliques, des chaux de construction telles que définies dans la norme EN 459-1, et leurs mélanges, et/ou dans lequel ledit granulat est choisi dans le groupe des graviers, des sables et des fillers, des granulats artificiels, des granulats issus de la déconstruction, des granulats spéciaux, des granulats de sous-produits d'autres industries et leurs mélanges.

6. Procédé de préparation selon la revendication 5, dans lequel ladite composition de chaux est une composition solide ou une suspension comme par exemple un lait de chaux ou une pâte de chaux.

7. Procédé de préparation selon l'une quelconque des revendications 1 à 6, dans lequel ladite étape d'enrobage comprend en outre une étape d'amenée d'une phase aqueuse.

8. Procédé selon l'une quelconque des revendications 1 à 7, dans lequel ledit granulat appartient à une classe granulaire d/D exprimée selon la norme EN 13043, en termes de dimensions inférieures d et supérieures D de tamis (en mm) de 0/4 à 0/30, en particulier une classe granulaire choisie dans le groupe constitué des classes granulaires de 0/4, 0/6, 0/8, 0/10, 0/14, 0/20, 0/30 et leurs mélanges ou dans lequel ledit granulat appartient à une classe granulaire d/D exprimée en termes de dimensions inférieures d et supérieures D de tamis de 2/4 à 10/14, en particulier une classe granulaire choisie dans le groupe constitué des classes granulaires 2/4, 2/6, 4/6, 6/10, 10/14 et leurs mélanges.

9. Procédé selon l'une quelconque des revendications précédentes, dans lequel ledit liant bitumineux comprend un ou plusieurs polymères, et/ou un ou plusieurs acides, et/ou un ou plusieurs fluxants en tant qu'additif additionnel du bitume et/ou de l'émulsion de bitume.

10. Composition de revêtement bitumineux à froid comprenant un liant bitumineux sous forme d'une émulsion cationique de bitume et un granulat, **caractérisée en ce que** ledit granulat est un granulat enrobé d'une composition de chaux, à raison d'une teneur en chaux de 0,05 à 2% en poids exprimée en équivalent hydroxyde (Ca(OH)₂ et/ou Mg(OH)₂ par rapport au poids total du granulat.

11. Composition de revêtement bitumineux à froid selon la revendication 10, dans laquelle ladite composition de chaux est choisie dans le groupe constitué des chaux hydratées calciques, des chaux hydratées dolomitiques, des magnésies hydratées, des chaux hydratée calco-magnésienne, des chaux calciques vives, de la magnésie, des chaux vives calco-magnésiennes ou dolomitiques, des chaux vives à réactivité retardée, des chaux partiellement pré-hydratées, des chaux vives surcuites, des chaux partiellement éteintes à additifs exogènes et leurs mélanges, des poussières de filtres, des cendres volantes, des ciments portland, des chaux hydrauliques, des chaux de construction telles que définies dans la norme EN 459-1, et leurs mélanges.

12. Composition de revêtement bitumineux à froid selon l'une des revendications 10 à 11, dans laquelle ledit granulat est choisi dans le groupe des graviers, des sables et des fillers, des granulats artificiels, des granulats issus de la déconstruction, des granulats spéciaux, des granulats de sous-produits d'autres industries et leurs mélanges.

13. Composition de revêtement bitumineux à froid selon l'une quelconque des revendications 10 à 12, dans laquelle ledit granulat appartient à une classe granulaire d/D exprimée en termes de dimensions inférieures d et supérieures D de tamis de 0/4 à 0/30, en particulier une classe granulaire choisie dans le groupe constitué des classes granulaires de 0/4, 0/6, 0/8, 0/10, 0/14, 0/20, 0/30 et leurs mélanges ou dans laquelle ledit granulat appartient à une classe granulaire d/D exprimée en termes de dimensions inférieures d et supérieures D de tamis de 2/4 à 10/14, en particulier une classe granulaire choisie dans le groupe constitué des classes granulaires 2/4, 2/6, 4/6, 6/10, 10/14 et leurs mélanges.

14. Composition de revêtement bitumineux à froid selon l'une quelconque des revendications 10 à 13, dans laquelle ledit liant comprend un ou plusieurs polymères, et/ou un ou plusieurs acides, et/ou un ou plusieurs fluxants en tant qu'additif additionnel du bitume et/ou de l'émulsion de bitume.

15. Composition de revêtement bitumineux à froid selon l'une quelconque des revendications 10 à 14, comprenant en outre un additif conventionnel d'émulsion de bitume, comme un tensioactif cationique contenant des groupes fonctionnels azote tels que des amines, des imidazolines, des amidoamines.

16. Composition de revêtement bitumineux à froid selon l'une quelconque des revendications 10 à 15, présentant une cohésion mesurée après 30 min de mûrissement à température ambiante par un essai à la plaque Vialit selon la norme EN 12272-3 **caractérisée par** une teneur en granulats détachés inférieure à 85/100 granulats, de préférence inférieure à 75/100 granulats et de manière particulièrement avantageuse inférieure à 65/100 granulats.

17. Composition de revêtement bitumineux à froid selon l'une quelconque des revendications 10 à 15, présentant une résistance conservée mesurée selon la norme NLT-162 supérieure ou égale à 50%, de préférence supérieure ou égale à 60%, en particulier supérieure ou égale à 75%.

18. Composition de revêtement bitumineux à froid selon l'une quelconque des revendications 10 à 17 , sous forme d'une composition d'enrobés à froid, choisie parmi une composition d'enrobés denses à froid, une composition de graves-émulsion ou une composition de retraitement d'émulsion.

19. Utilisation de chaux pour enrober des granulats de revêtement bitumineux à froid à base d'émulsion cationique de bitume.

20. Utilisation de chaux selon la revendication 19, dans laquelle le revêtement bitumineux à froid est choisi parmi les enduits superficiels d'usure, les revêtements d'enrobés à froid, choisis dans le groupe constitué des revêtements d'enrobés denses à froid, des revêtements de graves-émulsion et des revêtements de retraitement d'émulsion.

## Patentansprüche

1. Herstellungsverfahren von bituminösen Kaltbeschichtungen, insbesondere von Oberflächenverschleißbelägen (ESU), umfassend die Schritte
a) Herstellung eines bituminösen Bindemittels in Form einer kationischen Bitumenemulsion,
b) Herstellung eines Granulats, das mindestens eine erste Granulatfraktion umfasst, und
c) Bildung der bituminösen Kaltbeschichtung, die aus mindestens dem in das Bindemittel eingedrungenen Granulat besteht,
**dadurch gekennzeichnet, dass** der Schritt der Herstellung des Granulats einen Schritt des Überziehens der mindestens einen ersten Granulatfraktion mit Kalk umfasst, der das Aufbringen einer Kalkzusammensetzung auf die mindestens eine erste Granulatfraktion durch Eintauchen, Einweichen, Sprühen, Pulverisieren oder Mischen bei einem Kalkgehalt, bezogen auf das Gesamtgewicht des Granulats, in Höhe von 0,05 bis 2 Gewichts-%, ausgedrückt als Hydroxidäquivalent (Ca(OH)₂ und/oder Mg(OH)₂), umfasst.

2. Herstellungsverfahren nach Anspruch 1, umfassend
i) mindestens eine Zuführung des bituminösen Bindemittels auf eine zu beschichtende Oberfläche, um eine Bindemittelschicht auf der zu beschichtenden Oberfläche zu bilden,
ii) mindestens eine Zuführung des Granulats auf die zu beschichtende Oberfläche vor oder nach dem bituminösen Bindemittel, wobei die bituminöse Beschichtung aus mindestens einer Schicht des in das bituminöse Bindemittel eingedrungenen Granulats gebildet wird .

3. Herstellungsverfahren nach Anspruch 2, wobei die bituminöse Beschichtung, die aus mindestens einer Schicht des in das bituminöse Bindemittel eingedrungenen Granulats gebildet wird, eine asymmetrische oder symmetrische Anzahl von Schichten aus bituminösem Bindemittel und Granulat, gegebenenfalls alternierend, umfasst.

4. Herstellungsverfahren nach Anspruch 1, wobei
i) das bituminöse Bindemittel einem Mischer zugeführt wird,
ii) das Granulat dem Mischer während, vor oder nach dem bituminösen Bindemittel zugeführt wird, und
iii) die bituminöse Beschichtung aus der Mischung des in das Bindemittel eingedrungenen Granulats gebildet und auf eine zu beschichtende Oberfläche aufgebracht wird.

5. Herstellungsverfahren nach einem der Ansprüche 1 bis 4, wobei die Kalkzusammensetzung ausgewählt ist aus der Gruppe bestehend aus Weißkalkhydraten, Dolomitkalkhydraten, Magnesiahydraten, Kalzium/Magnesium-Kalkhydraten, gebrannten Weißkalken, Magnesia, Kalzium/Magnesium- oder dolomitischen Branntkalken, Branntkalken mit verzögerter Reaktivität, teilweise vorhydrierten Kalken, hartgebrannten Branntkalken, teilweise gelöschten Kalken mit exogenen Additiven und Mischungen davon, Filterstäuben, Flugasche, Portlandzementen, hydraulischen Kalken, Baukalken wie definiert in der Norm EN 459-1, und Mischungen davon, und/oder wobei das Granulat ausgewählt ist aus der Gruppe von Kiesen, Sanden und Füllstoffen, künstlichen Granulaten, Granulaten aus Rückbau, Spezialgranulaten, Granulaten von Nebenprodukten anderer Industrien und Mischungen davon.

6. Herstellungsverfahren nach Anspruch 5, wobei die Kalkzusammensetzung eine feste Zusammensetzung oder eine Suspension ist, wie beispielsweise eine Kalkmilch oder eine Kalkpaste.

7. Herstellungsverfahren nach einem der Ansprüche 1 bis 6, wobei der Schritt des Überziehens ferner einen Schritt des Zuführens einer wässrigen Phase umfasst.

8. Verfahren nach einem der Ansprüche 1 bis 7, wobei das Granulat zu einer Granulatklasse d/D gehört, ausgedrückt gemäß der Norm EN 13043 hinsichtlich der unteren Siebgröße d und oberen Siebgröße D (in mm) von 0/4 bis 0/30, insbesondere zu einer Granulatklasse ausgewählt aus der Gruppe bestehend aus den Granulatklassen 0/4, 0/6, 0/8, 0/10, 0/14, 0/20, 0/30 und deren Mischungen, oder wobei das Granulat zu einer Granulatklasse d/D gehört, ausgedrückt hinsichtlich der unteren Siebgröße d und oberen Siebgröße D von 2/4 bis 10/14, insbesondere einer Granulatklasse ausgewählt aus der Gruppe bestehend aus den Granulatklassen 2/4, 2/6, 4/6, 6/10, 10/14 und deren Mischungen.

9. Verfahren nach einem der vorstehenden Ansprüche, wobei das bituminöse Bindemittel ein oder mehrere Polymere und/oder eine oder mehrere Säuren und/oder ein oder mehrere Flussmittel als zusätzliches Additiv des Bitumens und/oder der Bitumenemulsion umfasst.

10. Bituminöse Kaltbeschichtungszusammensetzung, umfassend ein bituminöses Bindemittel in Form einer kationischen Bitumenemulsion und ein Granulat, **dadurch gekennzeichnet, dass** das Granulat ein mit einer Kalkzusammensetzung überzogenes Granulat mit, bezogen auf das Gesamtgewicht des Granulats, einem Kalkgehalt in Höhe von 0,05 bis 2 Gewichts-%, ausgedrückt in Hydroxidäquivalent (Ca(OH)₂ und/oder Mg(OH)₂, ist.

11. Bituminöse Kaltbeschichtungszusammensetzung nach Anspruch 10, wobei die Kalkzusammensetzung ausgewählt ist aus der Gruppe bestehend aus Weißkalkhydraten, Dolomitkalkhydraten, Magnesiahydraten, Kalzium/Magnesium-Kalkhydraten, gebrannten Weißkalken, Magnesia, Kalzium/Magnesium- oder dolomitischen Branntkalken, Branntkalken mit verzögerter Reaktivität, teilweise vorhydrierten Kalken, hartgebrannten Branntkalken, teilweise gelöschten Kalken mit exogenen Additiven und Mischungen davon, Filterstäuben, Flugasche, Portlandzementen, hydraulischen Kalken, Baukalken wie definiert in der Norm EN 459-1, und Mischungen davon.

12. Bituminöse Kaltbeschichtungszusammensetzung nach einem der Ansprüche 10 bis 11, wobei das Granulat ausgewählt ist aus der Gruppe von Kiesen, Sanden und Füllstoffen, künstlichen Granulaten, Granulaten aus Rückbau, Spezialgranulaten, Granulaten von Nebenprodukten anderer Industrien und Mischungen davon.

13. Bituminöse Kaltbeschichtungszusammensetzung nach einem der Ansprüche 10 bis 12, wobei das Granulat zu einer Granulatklasse d/D gehört, ausgedrückt hinsichtlich der unteren Siebgröße d und oberen Siebgröße D von 0/4 bis 0/30, insbesondere zu einer Granulatklasse ausgewählt aus der Gruppe bestehend aus den Granulatklassen 0/4, 0/6, 0/8, 0/10, 0/14, 0/20, 0/30 und deren Mischungen, oder wobei das Granulat zu einer Granulatklasse d/D gehört, ausgedrückt hinsichtlich der unteren Siebgröße d und oberen Siebgröße D von 2/4 bis 10/14, insbesondere einer Granulatklasse ausgewählt aus der Gruppe bestehend aus den Granulatklassen 2/4, 2/6, 4/6, 6/10, 10/14 und deren Mischungen.

14. Bituminöse Kaltbeschichtungszusammensetzung nach einem der Ansprüche 10 bis 13, wobei das Bindemittel ein oder mehrere Polymere und/oder eine oder mehrere Säuren und/oder ein oder mehrere Flussmittel als zusätzliches Additiv des Bitumens und/oder der Bitumenemulsion umfasst.

15. Bituminöse Kaltbeschichtungszusammensetzung nach einem der Ansprüche 10 bis 14, ferner umfassend ein herkömmliches Bitumenemulsionsadditiv, wie ein kationisches Tensid, das funktionelle Stickstoffgruppen enthält, wie Amine, Imidazoline, Amidoamine.

16. Bituminöse Kaltbeschichtungszusammensetzung nach einem der Ansprüche 10 bis 15 mit einer Kohäsion, gemessen nach 30 min Aushärten bei Raumtemperatur durch einen Vialit-Plattenversuch gemäß der Norm EN 12272-3, **gekennzeichnet durch** einen Gehalt an losem Granulat von weniger als 85/100 Granulat, bevorzugt weniger als 75/100 Granulat und auf besonders vorteilhafte Weise weniger als 65/100 Granulat.

17. Bituminöse Kaltbeschichtungszusammensetzung nach einem der Ansprüche 10 bis 15 mit einer bleibenden Festigkeit, gemessen gemäß der Norm NLT-162, von größer oder gleich 50 %, bevorzugt größer oder gleich 60 %, insbesondere größer oder gleich 75 %.

18. Bituminöse Kaltbeschichtungszusammensetzung nach einem der Ansprüche 10 bis 17 in Form einer Kaltüberzugszusammensetzung, ausgewählt aus einer dichten Kaltüberzugszusammensetzung, einer Kiesemulsionszusammensetzung oder einer Emulsionsaufbereitungszusammensetzung.

19. Verwendung von Kalk zum Überziehen von Granulaten bituminöser Kaltbeschichtungen auf Basis von kationischer Bitumenemulsion.

20. Verwendung von Kalk nach Anspruch 19, wobei die bituminöse Kaltbeschichtung ausgewählt ist aus Oberflächenverschleißbelägen, Kaltüberzugsbeschichtungen, ausgewählt aus der Gruppe bestehend aus dichten Kaltüberzugsbeschichtungen, Kiesemulsionsbeschichtungen und Emulsionsaufbereitungsbeschichtungen.

## Claims

1. A method for preparing cold-process bituminous coatings, in particular of wear surface dressings (WSD), comprising the steps of
a) preparing a bituminous binder in the form of a cationic emulsion of bitumen,
b) preparing an aggregate comprising at least one first aggregate fraction, and
c) forming said cold-process bituminous coating formed with at least said aggregate interpenetrated into said binder,
**characterized in that** said step of preparing said aggregate comprises a step for coating said at least one first aggregate fraction with lime, which comprises application of a lime composition on said at least one first aggregate fraction by immersion, soaking, vaporization, spraying or mixing in an amount of a lime content from 0.05 to 2% by weight expressed in hydroxide equivalent (Ca(OH)₂ and/or Mg(OH)₂) based on the total weight of aggregate.

2. The preparation method according to claim 1, comprising
i) at least one bringing of said bituminous binder onto a surface to be coated, in order to form a binder layer on said surface to be coated,
ii) at least one bringing of said aggregate onto said surface to be coated, before or after said bituminous binder, said bituminous coating being formed with at least one layer of said aggregate interpenetrated into said bituminous binder.

3. The preparation method according to claim 2, wherein said bituminous coating formed with at least one layer of said aggregate interpenetrated into said bituminous binder comprises an asymmetrical or symmetrical number of layers of bituminous binder and of aggregates possibly alternating.

4. The preparation method according to claim 1, wherein
i) said bituminous binder is brought into a kneader,
(ii) said aggregate is brought into said kneader during, before or after said bituminous binder, and
iii) said bituminous coating is formed with the mixture of said aggregate interpenetrated into said binder and is applied to a surface to be coated.

5. The preparation method according to any one of claims 1 to 4, wherein said lime composition is selected from the group consisting of calcium hydrated limes, dolomitic hydrated limes, hydrated magnesias, calcium-magnesium hydrated limes, calcium quick limes, magnesia, calcium-magnesium or dolomitic quick limes, quick limes with retarded reactivity, partly pre-hydrated limes, over-burnt quick limes, partly slaked limes with exogenous additives and mixtures thereof, filter dusts, flying ashes, Portland cements, hydraulic limes, construction limes as defined in the EN 459-1 standard, and mixtures thereof, and/or wherein said aggregate is selected from the group of gravels, sands and fillers, artificial aggregates, aggregates from deconstruction, special aggregates, aggregates of by-products from other industries and mixtures thereof.

6. The preparation method according to claim 5, wherein said lime composition is a solid composition or a suspension such as for example a lime milk or a lime paste.

7. The preparation method according to any one of claims 1 to 6, wherein said coating step further comprises a step for bringing an aqueous phase.

8. The preparation method according to any one of claims 1 to 7, wherein said aggregate belongs to a granular class d/D expressed according to the EN 13043 standard, in terms of lower d and upper D sieve dimensions (in mm) from 0/4 to 0/30, in particular a granular class selected from the group consisting of granular classes of 0/4, 0/6, 0/8, 0/10, 0/14, 0/20, 0/30 and mixtures thereof or wherein said aggregate belongs to a granular class d/D expressed in terms of lower d and upper D sieve dimensions from 2/4 to 10/14, in particular a granular class selected from the group consisting of granular classes 2/4, 2/6, 4/6, 6/10, 10/14 and mixtures thereof.

9. The method according to any one of the preceding claims, wherein said bituminous binder comprises one or more polymers, and/or one or more acids, and/or one or more fluxing agents as an additional additive of the bitumen and/or of the bitumen emulsion.

10. A cold-process bituminous coating composition comprising a bituminous binder in the form of a cationic emulsion of bitumen and an aggregate, **characterized in that** said aggregate is an aggregate coated with a lime composition, with a lime content from 0.05 to 2% by weight expressed as a hydroxide equivalent (Ca(OH)₂ and/or Mg(OH)₂ based on the total weight of the aggregate.

11. The cold-process bituminous coating composition according to claim 10, wherein said lime composition is selected from the group consisting of calcium hydrated limes, dolomitic hydrated limes, hydrated magnesias, calcium-magnesium hydrated limes, calcium quick limes, magnesia, calcium-magnesium or dolomitic quick limes, quick limes with retarded reactivity, partly pre-hydrated limes, over-burnt quick limes, partly slaked limes with exogenous additives and mixtures thereof, filter dusts, flying ashes, Portland cements, hydraulic limes, construction limes as defined in the EN 459-1 standard, and mixtures thereof.

12. The cold-process bituminous coating composition according to any one of claims 10 to 11, wherein said aggregate is selected from the group of gravels, sands and fillers, artificial aggregates, aggregates from deconstruction, special aggregates, aggregates of by-products of other industries and mixtures thereof.

13. The cold-process bituminous coating composition according to any one of claims 10 to 12, wherein said aggregate belongs to a granular class d/D expressed in terms of lower d and upper D sieve dimensions of 0/4 to 0/30, in particular a granular class selected from the group consisting of granular classes of 0/4, 0/6, 0/8, 0/10, 0/14, 0/20, 0/30 and mixtures thereof or wherein said aggregate belongs to a granular class d/D expressed in terms of lower d and upper D sieve dimensions from 2/4 to 10/14, in particular a granular class selected from the group consisting of granular classes 2/4, 2/6, 4/6, 6/10, 10/14 and mixtures thereof.

14. The cold-process bituminous coating composition according to any one of claims 10 to 13, wherein said binder comprises one or more polymers, and/or one or more acids, and/or one or more fluxing agents as an additional additive of the bitumen and/or of the bitumen emulsion.

15. The cold-process bituminous coating composition according to any one of claims 10 to 14, further comprising a conventional bitumen emulsion additive, like a cationic surfactant containing nitrogen functional groups such as amines, imidazolines, amidoamines.

16. The cold-process bituminous coating composition according to any one of claims 10 to 15, having a cohesion measured after 30 min of maturation at room temperature by a Vialit plate test according to the EN 12272-3 standard **characterized by** a content of detached aggregates of less than 85/100 aggregates, preferably less than 75/100 aggregates and particularly advantageously less than 65/100 aggregates.

17. The cold-process bituminous coating composition according to any one of claims 10 to 15, having a retained resistance measured according to the NLT-162 standard greater than or equal to 50%, preferably greater than or equal to 60%, in particular greater than or equal to 75%.

18. The cold-process bituminous coating composition according to any one of claims 10 to 17, in the form of a cold-process bitumen composition chosen from a composition of cold dense bitumen coatings, a composition of grave-emulsions or a composition of emulsion re-treatment.

19. A use of lime for coating cold-process bituminous coating aggregates based on a cationic bitumen emulsion.

20. The use of lime according to claim 19, wherein the cold-process bituminous coating is chosen from wear surface dressings, cold bitumen coatings, chosen in the group consisting of cold dense bitumen coatings, grave-emulsion coatings and emulsion re-treatment coatings.
